**Europäisches Patentamt**

(19) **European Patent Office**

**Office européen des brevets**

(11) Publication number : **0 470 857 A1**

(12) # EUROPEAN PATENT APPLICATION

(21) Application number : **91307354.0**

(51) Int. Cl.⁵ : **G11B 23/50**

(22) Date of filing : **09.08.91**

(30) Priority : **10.08.90 JP 212801/90**
**17.10.90 JP 279870/90**
**23.10.90 JP 283455/90**
**13.12.90 JP 410412/90**
**21.12.90 JP 412692/90**
**23.07.91 JP 182446/91**

(43) Date of publication of application :
**12.02.92 Bulletin 92/07**

(84) Designated Contracting States :
**DE FR GB**

(71) Applicant : **MITSUBISHI DENKI KABUSHIKI KAISHA**
**2-3, Marunouchi 2-chome Chiyoda-ku**
**Tokyo (JP)**

(72) Inventor : **Nakatsukasa, Naoyuki, c/o**
**Mitsubishi Denki K.K.**
**Itami Seisakusho, 1-1, Tsukaguchihonmachi**
**8-chome**
**Amagasaki-shi, Hyogo-ken (JP)**
Inventor : **Tanaka, Katsufusa, c/o Mitsubishi**
**Denki K.K.**
**Itami Seisakusho, 1-1, Tsukaguchihonmachi**
**8-chome**
**Amagasaki-shi, Hyogo-ken (JP)**

Inventor : **Hattori, Kenji, c/o Mitsubishi Denki**
**K.K.**
**Itami Seisakusho, 1-1, Tsukaguchihonmachi**
**8-chome**
**Amagasaki-shi, Hyogo-ken (JP)**
Inventor : **Yamasita, Tohru, c/o Mitsubishi**
**Denki K.K.**
**Itami Seisakusho, 1-1, Tsukaguchihonmachi**
**8-chome**
**Amagasaki-shi, Hyogo-ken (JP)**
Inventor : **Tanaka, Toshihiro, c/o Mitsubishi D.**
**Eng. Co. Ltd.**
**Itami Jigyosho, 1-1, Tsukaguchihonmachi**
**8-chome**
**Amagasaki-shi, Hyogo-ken (JP)**
Inventor : **Sasaki, Toshikazu, c/o Mitsubishi D.**
**Eng. Co. Ltd.**
**Itami Jigyosho, 1-1, Tsukaguchihonmachi**
**8-chome**
**Amagasaki-shi, Hyogo-ken (JP)**
Inventor : **Kawamura, Masaharu,öc/o**
**Mitsubishi D. Eng. Co. Ltd**
**Itami Jigyosho, 1-1, Tsukaguchihonmachi**
**8-chome**
**Amagasaki-shi, Hyogo-ken (JP)**

(74) Representative : **Nicholls, Michael John et al**
**J.A. Kemp & Co., 14, South Square, Gray's Inn**
**London WC1R 5EU (GB)**

(54) **Disk cleaning device and disk operating apparatus incorporating the same.**

(57)    A disk operating apparatus includes a recording/reproducing device and a disk cleaning device both mounted on an upright stocker between a pair of opposed side plates thereof. The cleaning device is able to automatically clean a great number of disks in a simple and most efficient manner in a short time. To this end, a disk cartridge 110 is loaded into a housing 10 by means of a loading mechanism 12 and placed in position on a turntable 18 with a portion of the disk 112 in the cartridge being exposed therefrom. The turntable 18 is rotated by a drive mechanism 28 while a cleaning tape 15, which is wound at one end thereof around a feeding reel 22 and at the other end thereof around a winding reel 11, is resiliently urged at a portion thereof between the feeding and winding reels toward a surface of the disk under the action of a presser roller 13 so as to clean the disk surface. In addition, a feeding mechanism 89 is operated to rotate the winding reel 11 to wind up a soiled or dirty portion of the cleaning tape 15 therearound, thus making a clean surface of the cleaning tape 15 in contact with the disk surface at all times.

EP 0 470 857 A1

FIG. 1

The present invention relates to a disk cleaning device for cleaning a surface of a disk such as an optical disk, an electromagnetic disk, etc., which functions as an information recording medium and which is received in a cartridge. It also relates to a disk operating apparatus incorporating therein such a disk cleaning device.

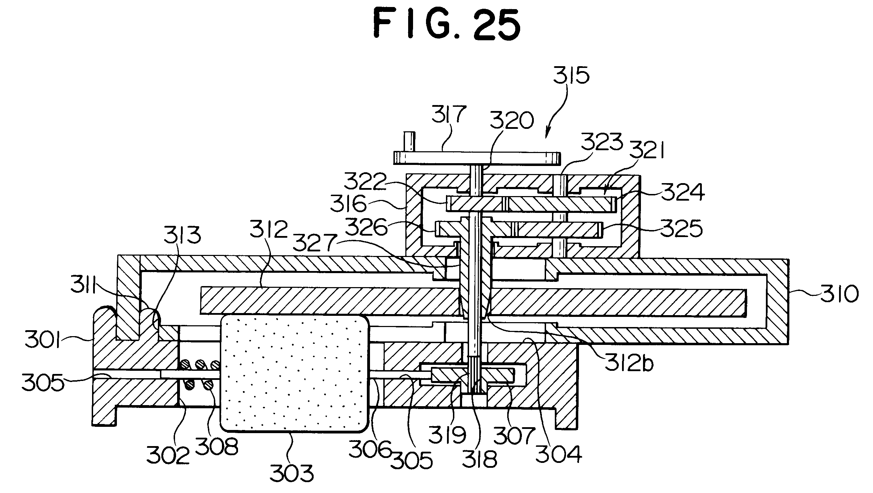

Fig. 25 shows, in a vertical cross section, a conventional disk cleaning device as disclosed in Japanese Patent Laid-Open No. 64-46278. In this figure, a turntable 301 for supporting a cartridge houses in its hollow interior 302 a cylindrical cleaning member 303 formed of a brush, cloth or the like, which is movably supported therein by a support pin or rod 306 which has its opposite ends slidably received in a pair of aligned guide bores 305 formed in the opposite side walls of the turntable 301 in a parallel relation with an upper cartridge support surface 304 thereof. In addition, inside the turntable 301, there is rotatably disposed a cam 307 which has a wave-shaped outer configuration in a plan view. The support pin 306 is urged into abutment at one end thereof against the outer peripheral surface of the cam 307 under the action of a coiled compression spring 308 which is disposed at the other end of the pin 306 in a surrounding relation thereto. On the upper surface of the turntable 301, there is an upright positioning projection 311 for positioning the cartridge 310, so that the cartridge 310 can be positioned in place on the turntable 301 with a positioning slot 310a formed therein being fitted over the positioning projection 311.

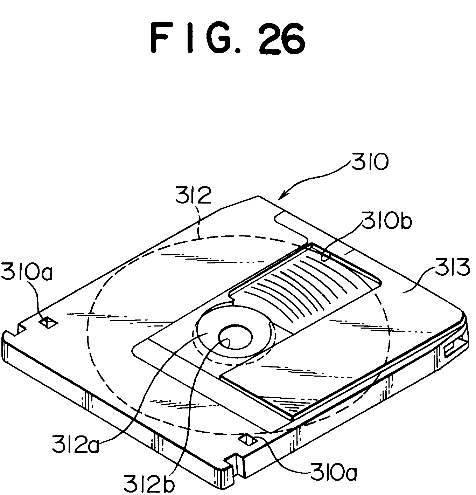

As illustrated in Fig. 26, the cartridge 310 has a substantially rectangular configuration in a plan view, and is formed of synthetic resin such as plastics and the like. The cartridge 310 houses therein a circular disk 312 such as an optical disk, an electromagnetic disk, etc., which acts as a recording medium. The cartridge 310 has a pair of positioning slots 310a formed therein at one side surface thereof, and a window 310b at the same side surface through which a portion of a recording surface of the disk 312 can be exposed to the outside, the window 310b being normally closed by a sliding metallic shutter 313. The disk 312 is provided at its center with a circular hub 312a formed of a magnetizable material such as metal. The hub 312a is exposed to the outside from one side surface of the cartridge 310 and has a central bore 312b formed therethrough at the center thereof.

Turning now to Fig. 25, a drive mechanism 315 for rotatingly driving the disk 312 and the cleaning member 303 includes a short cylindrical housing 316 having a pair of closed ends, a spindle 320 vertically extending through the upper and lower surfaces of the housing 316 and having a handle 317 provided at its one end for rotation by an operator, the spindle 328 being formed at the other end thereof with an axial spline 319 engageable with a corresponding axial spline formed on the inner surface of the central bore 318, and a gear train 321 received in the housing 316 for rotating the disk 312 in the cartridge 310. The gear train 321 includes a first drive gear wheel 322 fixedly mounted on the spindle 320, a first driven gear wheel 324 disposed in parallel with the spindle 320 and fixedly secured to a rotation shaft 323 which is rotatably supported at the opposite ends thereof by the upper and lower portions of the housing 316 and which is disposed in meshing engagement with the first drive gear wheel 322, a second drive gear wheel 325 fixedly secured to the rotation shaft 323, and a second driven gear wheel 326 rotatably mounted on the spindle 320 and placed in meshing engagement with the second drive gear wheel 325. The first driven gear wheel 324 has a diameter greater than the first drive gear wheel 322, and thus forms a speed reduction mechanism for transmitting the rotation of the spindle 320 to the rotation shaft 323 at a reduced rotational speed through the first drive and driven gear wheels 322, 324. The second driven gear wheel 326 is integrally formed with a hollow cylindrical chuck 327 which extends through the lower surface of the housing 316 from one side thereof. The chuck 327 is rotatably fitted over the spindle 320 and has its tip end tapered so as to facilitate its insertion into the central bore 312b in the disk 312.

The operation of the above-described conventional disk cleaning device will now be described in detail. First, by inserting the positioning slot 310a in a cartridge 310 into the positioning projection 311 on the turntable 301, the cartridge 310 is placed on the turntable 301 with the shutter 313 being opened to expose a portion of an information recording surface of the disk 312 in the cartridge 310, Then, the chuck 327 of the drive unit 315 is inserted into the central bore 312b in the disk 312 received in the cartridge 310 while the axial spline 319 at the tip end of the spindle 320 is engaged with the corresponding axial spline formed on the inner surface of the central bore 318 in the cam 307. As the handle 317 is rotated by an operator in this state, the rotation of the handle 317 is transmitted to the disk 312 through the gear train 321 and the chuck 327, causing the disk 312 to rotate. Simultaneous with this, the rotation of the handle 317 is also transmitted through the spindle 320 to the cam 307 to rotate it. In accordance with the rotation of the cam 307, the support pin 306, which is urged by the spring 308 into abutment at its one end against the outer peripheral surface of the cam 307, is driven to reciprocate in a radial direction of the cam 307 within the confines of the guide holes 305 in the turntable 301, so that the cleaning member 303 supported by the pin 306 is caused to reciprocate radially of the rotating disk 312 in a similar manner. In this manner, the surface of the disk 312 is cleaned by the cleaning member 303 in accordance with the rotation of the disk 312 as well as the reciprocating motion of the cleaning member 303 in a radial direction of the disk 312. When the disk surface has been cleaned with a prescribed number of rotations of the handle 317, the drive unit 315 is removed from the cartridge 310 and the cleaned cartridge 310 is then removed from the turntable 301. In this manner, the cleaning operation has finished. In addition, in order to clean another disk, the above-described procedure is repeated.

In this regard, if the cleaning member 303 has been soiled or got dirty to a certain extent, it is replaced with a new one in the following manner. Namely, the operator moves the cleaning member 303 in a direction opposite to the cam 307 while compressing the spring 308, pulls the pin 306 out of the guide holes 305, then inserts one end of a new pin 306 having a fresh cleaning member 303 together with the spring 308 mounted thereon into one of the guide holes 305, and finally inserts the other end thereof into the other guide hole 305.

With the above-described conventional disk cleaning device, however, there are following disadvantages. In order to clean disks 312 in many cartridges 310, it is necessary for an operator to manually place the cartridges 310 on the turntable 301, remove them therefrom one by one as well as manually mount and dismantle the drive unit 315 each time one disk 312 has been cleaned. In addition, manual replacement of a soiled or used cleaning member 303 with a new one is troublesome and time-consuming, so it is extremely difficult and inefficient to clean a great number of disks. For these reasons, it is almost impossible to incorporate the conventional cleaning device in a disk operating apparatus, which serves to automatically recording and reproducing pieces of information into and from a disk as required, for the purpose of automating the disk cleaning operation therein.

Furthermore, when cleaning a disk 312, the cleaning member 303 contacts a disk surface in a dry state, so relatively weak dust such as powder, particles and the like adhering to the disk surface with relatively weak adhesive forces can be removed, but it is difficult to attain sufficient cleaning or dust-removing performance against more strong or sticky dust in the form of oily adherents such as tobacco nicotine, etc.

Moreover, since the disk 312 and the cam 307 are both driven to rotate through the rotation of the handle 317, that is they are driven by one and the same driving source, the locus of rotation of the cleaning member 303 with respect to the disk 312 repeats or reiterates at a certain period so that specific portions of the cleaning member 303 are always in contact with specific portions of the disk 312. As a result, the entire surface of the cleaning member 303 can not contact various portions of the disk surface in a uniform manner during rotation of the disk 312, thus giving rise to the problem of ineffective and non-uniform cleaning.

Accordingly, the present invention is intended to overcome the above-mentioned problems encountered with the conventional disk cleaning device.

An object of the present invention is to provide a novel and improved disk operating apparatus incorporating therein a disk cleaning device in which dust or dirty matters adhering to surfaces of a multitude of disks in cartridges stored in a stocker can be clearly removed in an efficient manner, thus preventing adverse effects on the recording and/or reproducing of various pieces of information into or from the disks to ensure highly reliable operation.

Another object of the present invention is to provide a novel and improved disk cleaning device which can automatically clean a great number of disks in a short time in an easy and efficient manner.

A further object of the present invention is to provide a novel and improved disk cleaning device in which a cleaning member, when gets dirty or soiled, can be replaced with a new one without difficulty, and which is easy to maintain.

A yet another object of the present invention is to provide a disk cleaning device in which a cleaning member is in the form of a cleaning tape received in a cassette so that one can replace a used dirty cleaning tape with a new and fresh one in an extremely easy manner while keeping the fresh cleaning tape in a clean state without contacting it by hand.

A still further object of the present invention is to provide a disk cleaning device in which a cleaning member in the form of a cleaning tape is caused to reciprocate in a radial direction of a disk independently of the rotation thereof so that it can uniformly contact the entire surface of the disk within the confines of the reciprocating motion thereof, thus substantially improving the cleaning performance.

A further object of the present invention is to provide a disk cleaning device which can use the opposite surfaces of a cleaning tape, and hence is highly economical.

A further object of the present invention is to provide a disk cleaning device in which a cleaning tape is resiliently urged toward a surface of a disk to provide intimate contact therewith for improved cleaning effect.

A further object of the present invention is to provide a disk cleaning device in which a cleaning tape is intermittently or continuously fed little by little so that a fresh portion of the cleaning tape is always made in contact with a surface of a disk to improve the cleaning effect.

A further object of the present invention is provide a disk cleaning device which can moisten a cleaning tape to enhance its cleaning ability whereby strong or sticky dust or adherents such as oily stains or films attached to a disk surface can be clearly removed in an efficient manner.

A further object of the present invention is provide a disk cleaning device in which the process of moistening a cleaning tape can be automated without any difficulty to greatly enhance the cleaning efficiency.

In order to achieve the above objects, according to one aspect of the present invention, there is provided a disk operating apparatus comprising: a stocker for storing a multitude of disk cartridges each receiving therein a disk which acts as an information recording medium; a recording/reproducing device disposed in alignment with the stocker for recording and reproducing pieces of information into and from the disk in a cartridge; a disk cleaning device disposed in alignment with the stocker and the recording/reproducing device for cleaning a surface of the disk in a cartridge; and a cartridge transporting mechanism for transporting a cartridge to and from the stocker, the recording/reproducing device and the disk cleaning device.

According to another aspect of the invention, there is provided a disk cleaning device comprising: a housing; a loading mechanism in the housing for loading into and unloading from the housing a cartridge which receives a disk therein; and a cleaning mechanism for cleaning the disk in a cartridge loaded into the housing by the loading mechanism. The cleaning mechanism comprises: a turntable rotatably supported in the housing for fixedly holding a cartridge thereon with a portion of a surface of the disk in the cartridge being exposed therefrom; driving means for driving the turntable to rotate; a cleaning tape having one end thereof connected with a feeding reel and the other end thereof connected with a winding reel, the cleaning tape being resiliently biased by means of a presser roller into contact at a portion thereof between the feeding and winding reels with the exposed surface portion of the disk in the cartridge for cleaning thereof; and a feeding mechanism for rotating the winding reel in a direction to wind up the cleaning tape therearound.

Preferably, the feeding and winding reels, the presser roller and the cleaning tape are formed into a single cleaning unit independently of the turntable and the driving means so that they can be taken out from the housing as a unit.

In a preferred form, the cleaning unit comprises: a cleaning tape cassette incorporating therein the feeding and winding reels having the cleaning tape wound therearound; and a support mechanism including the presser roller and supporting thereon the cleaning tape cassette in a detachable manner.

Preferably, oscillating means is provided independently of the driving means for reciprocatively oscillating the cleaning tape in a radial direction of the disk.

preferably, the feeding and winding reels are of substantially the same construction, and these reels have support shafts detachably supported at their opposite ends by the opposite side plates of the support frame in such a manner that the mounting positions of the feeding and winding reels on the support frame are replaced with each other with the cleaning tape being turned upside down.

Preferably, the opposite side plates of the support frame have a pair of aligned elongated holes into which the support shaft of the presser roller is loosely fitted at its opposite ends so that the presser roller can be resiliently urged toward the cleaning tape by biasing means.

In one form, the feeding mechanism comprises means for intermittently rotating the winding reel little by little in a direction to wind up the cleaning tape therearound.

In another form, the feeding mechanism comprises means for continuously and gradually rotating the winding reel in a direction to wind up the cleaning tape therearound.

It is preferred that the disk cleaning device further include means for moistening the cleaning tape.

Preferably, the means for moistening the cleaning tape comprises a cleaning liquid supplying mechanism for supplying a cleaning liquid to the cleaning tape in response to a cartridge loading operation of the loading mechanism.

The above and other objects, features and advantages of the present invention will become more readily apparent from the ensuing detailed description of several preferred embodiments of the invention taken in conjunction with the accompanying drawings.

Fig. 1 is a perspective view of a disk operating apparatus incorporating therein a disk cleaning device in accordance with a first embodiment of the present invention;

Fig. 2 is a vertically sectioned side elevation of the disk cleaning device of Fig. 1;

Fig. 3 is a partially cutaway plan view of a cleaning unit of Fig. 2;

Fig. 4 is a cross sectional view along line IV-IV in Fig. 2;

Fig. 5 is a perspective view of the cleaning unit of Fig. 2;

Fig. 6 is a partially cutaway front elevation of a winding reel of Fig. 2;

Fig. 7 is a perspective view of a feeding reel of Fig. 2;

Fig. 8 is a plan view showing the outer peripheral configuration of a cam of Fig. 2;

Fig. 9 is a view similar to Fig. 4, but showing a disk cleaning device in accordance with a second embodiment of the present invention;

Fig. 10 is a schematic perspective view of a disk cleaning device in accordance with a third embodiment of the present invention;

Fig. 11 is a perspective view of a cleaning unit of a disk cleaning device in accordance with a fourth embodiment of the present invention;

Fig. 12 is a side elevation of a cleaning unit of Fig. 11;

Fig. 13 is a cross sectional view along line XIII-XIII of Fig. 12;

Fig. 15 is a perspective view of a cleaning tape cassette removed from a support mechanism, being looked from one side thereof;

Fig. 16 is a perspective view of the support mechanism for supporting the cleaning tape cassette;

Fig. 17 is a disassembled perspective view of the support mechanism of Fig. 16;

Fig. 18 is a partial perspective view showing the cleaning tape cassette mounted on the support mechanism;

Fig. 19 is a cross sectional view of a disk cleaning device in accordance with a fifth embodiment of the present invention;

Fig. 20 is a cross section showing a modified form of cleaning tape;

Fig. 21 is a cross section showing one operating state of a disk cleaning device in accordance with a sixth embodiment of the present invention;

Fig. 22 is a cross section showing another operating state of the disk cleaning device of Fig. 21;

Fig. 23 is a plan view of the disk cleaning device of Fig. 21;

Fig. 24 is a plan view of the disk cleaning device of Fig. 22;

Fig. 25 is a vertical cross section of a conventional disk cleaning device; and

Fig. 26 is a perspective view of a cartridge.

A several preferred embodiments of the present invention will be described in detail while referring to the accompanying drawings. In the following description, the same or corresponding parts throughout the embodiments are identified by the same symbols.

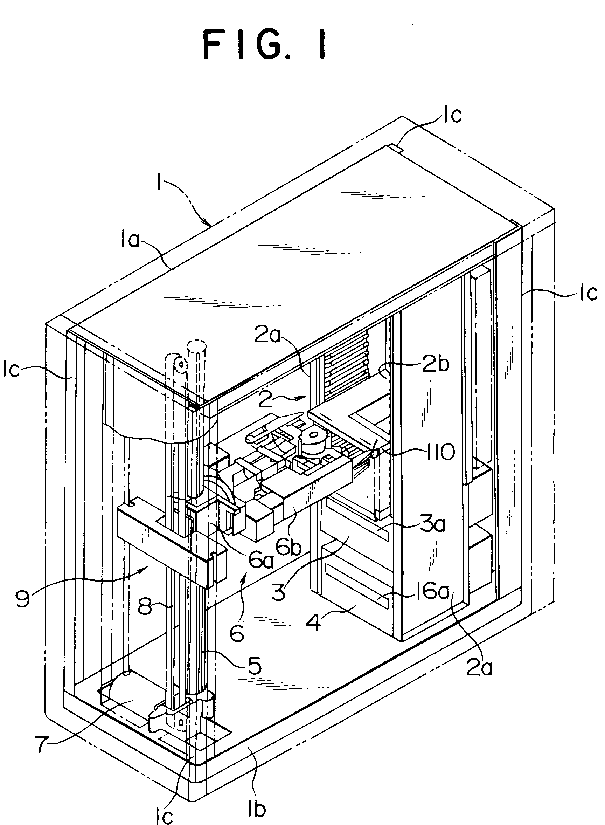

Figs. 1 through 8 show a first embodiment of the present invention. First, in Fig. 1, there is illustrated, in a perspective view, the general arrangement of a disk operating apparatus incorporating therein a disk cleaning device constructed in accordance with the first embodiment.

The disk operating apparatus illustrated includes a box-shaped housing 1, which comprises a rectangular-shaped top plate 1a, and a rectangular-shaped bottom base 1b disposed in parallel with the upper plate 1a, four metallic frame members 1c each of an L-shaped cross section connecting four corners of the top plate 1a and the corresponding four corners of the bottom plate 1b, and six panels enclosing six sides of the thus constructed hexagonal frame. Inside the housing 1, there is disposed an upright stocker 2 for storing a multitude of cartridges 110 (which are similar in structure to the cartridge 310 of Fig. 26) in a vertically aligned horizontal manner. At the lower portion of the stocker 2, there is disposed a recording/reproducing device 3 for recording and reproducing pieces of information into and from a disk such as an optical disk, a magnetic disk, etc., which is encased in a cartridge 110. Also, at the lower portion of the stocker 2 under the recording/reproducing device 3, there is disposed a disk cleaning device 4 in a vertically aligned manner which has substantially the same outer configuration and dimensions as those of the recording/reproducing device 3. The recording/reproducing device 3 and the disk cleaning device 4 are detachably fixed to a pair of opposite side plates 2a, 2a of the stocker 2 through appropriate fastening means such as screws (not shown), so that by detaching or unscrewing the fastening means, they can be slidingly and horizontally moved along guide rails (not shown) secured to the opposite side plates 2a, 2a and thus removed from the housing 1. The recording/reproducing device 3 and the disk cleaning device 4 have inlet openings 3a, 16a, respectively, for loading and unloading a cartridge 110, the inlet openings 3a, 16a being disposed in a vertically aligned relation with each other.

Inside the housing 1, there is disposed a vertical guide shaft 5 to which a carrier mechanism 6 is vertically slidably supported for transporting, loading and unloading a cartridge 110 between the stocker 2, the recording/reproducing device 3 and the disk cleaning device 4. The carrier mechanism 6 is driven to move in the vertical direction along the guide shaft 5 under the action of a motor 7 through an endless timing belt 8. The carrier mechanism 6 includes a movable base 6a supported by the guide shaft 5 for vertical sliding movement therealong, and a cartridge loading/unloading mechanism 6b rotatably supported by the movable base 6a and horizontally movable toward and away from the stocker 2, the recording/reproducing device 3 and the disk cleaning device 4 for transporting, loading and unloading a cartridge 110. In this connection, the guide shaft 5, the carrier mechanism 6, the motor 7 and the timing belt 8 together constitute a cartridge transportation mechanism 9.

Next, the construction of the disk cleaning device 4 will be described below. The disk cleaning device 4 includes a housing 10 which accommodates therein a loading mechanism 12 for loading therein and unloading therefrom a cartridge 110 containing therein a disk 112, and a cleaning mechanism 14 for cleaning a surface of the disk 112 in the cartridge 110. The loading mechanism 12 serves to load and unload a cartridge 110 into and from the inlet opening 16a in a front panel 16 of the housing 10, and it may be a conventional loading mechanism generally used in the recording/reproducing device 3. Thus, a detailed description of the loading mechanism 12 is omitted.

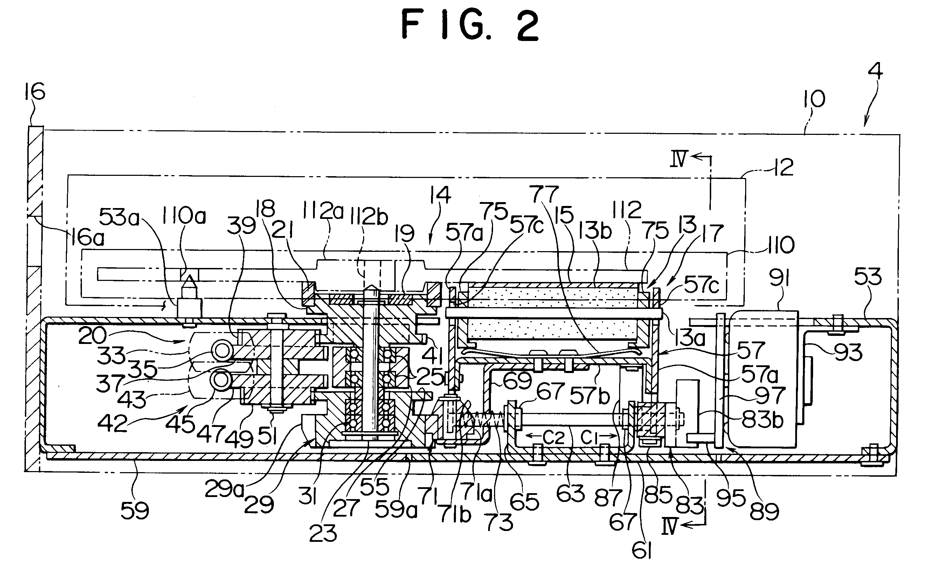

Although not illustrated, inside the loading mechanism 12, there are provided three position sensing limit switches one for sensing a cartridge loaded position at which a cartridge 110 is inserted into the loading mechanism 12 from the inlet opening 16a in the front panel 16 by the cartridge transportation mechanism 9, another one for sensing a cartridge set position at which a cartridge 110 is set in place on the turntable 18 under the loading action of the loading mechanism 12, as shown in Fig. 2, and the last one for sensing a cartridge discharge position at which a cartridge 110 is discharged to the inlet opening 16a through the unloading action of the loading mechanism 12.

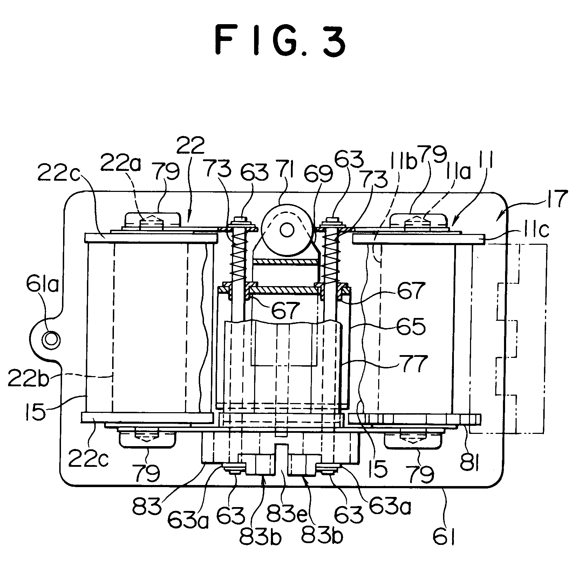

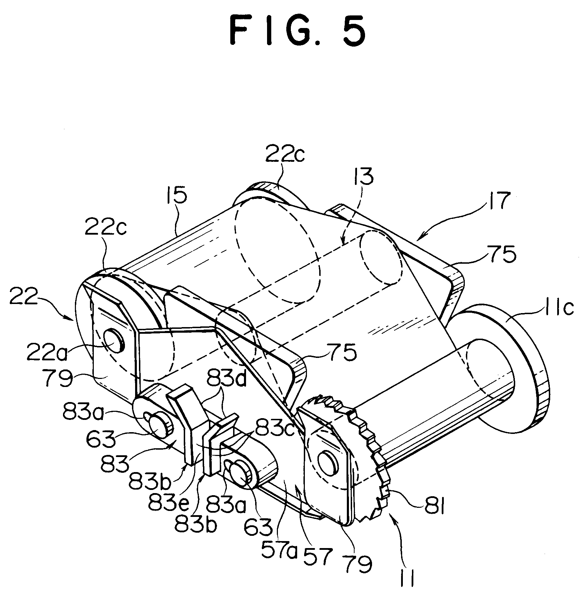

The cleaning mechanism 14 includes the turntable 18 rotatably supported by the housing 10 for fixedly holding thereon the disk 112 in a cartridge 110 with a portion of a disk surface exposed therefrom, a drive mechanism 20 for rotatingly driving the turntable 18, and a cleaning unit 17 having a cleaning member 15 in the form of a cleaning tape formed of cloth, fabric and the like, the cleaning tape 15 having one end thereof wound around a feeding reel 22 (see Figs. 3 and 5) and the other end thereof wound around a winding reel 11 (see Figs. 3 and 5) with a portion thereof between the feeding and winding reels 22, 11 being resiliently pressed against a surface of the disk 112 under the bias of the presser roller 13.

The turntable 18 is provided at its top center with a circular magnet 19, and at its radially outer peripheral edge with an annular stop 21, so that when a cartridge 110 is placed on the turntable 18, the central hub 112a of the disk 112 formed of a magnetizable material such as metal is received inside the annular stop 21 and magnetically attracted to the magnet 19 to be fixedly held on the turntable 18. In addition, the disk 112 is prevented from its radial movement by means of the annular stop 21. A spindle 23 extends through the center of the turntable 18 in the vertical direction, and it is fixedly connected at an upper end thereof with the turntable 18. The spindle 23 is rotatably supported at a portion intermediate the opposite ends thereof by the side walls of the housing 10 through a bearing means 25 in the form of a pair of vertically spaced ball bearings and a bearing retainer 27. The upper end of the spindle 23 upwardly projects slightly from the upper surface of the turntable 18 for insertion into the central bore 112b in the hub 112a of the disk 112. To facilitate such insertion, the upper end of the spindle 23 is tapered to form a conical configuration. A cam 29 is rotatably supported by the spindle 23 at a lower end thereof through a bearing means 31 in the form of a pair of vertically spaced ball bearings.

The drive mechanism 20 for rotatingly driving the disk 112 comprises a first motor 33 mounted on the housing 10, a first worm shaft 35 operatively connected with the rotation shaft of the first motor 33, a first worm wheel 37 in mesh with the first worm shaft 35, a first drive gear wheel 39 integrally formed with the first worm wheel 37, and a first driven gear wheel 41 integrally formed with the turntable 18 at the lower surface thereof and being in mesh with the first drive gear wheel 39. The first driven gear wheel 41 is smaller in diameter than the first drive gear wheel 39. Thus, as the first motor 33 is energized to rotate, the rotative force or torque of the motor 33 is transmitted to the turntable 18 through the intermediary of the first worm shaft 35, first worm wheel 37, first drive gear wheel 39 and the first driven gear wheel 41, so that the turntable 18 is thereby caused to rotate at a reduced speed.

Under the first motor 33, there is disposed a second motor 43 having a rotation shaft operatively connected with a second worm shaft 45 which is in meshing engagement with a second worm wheel 47 at a location below the first worm shaft 35. The second worm wheel 47 is integrally formed with a second drive gear wheel 49. The second worm wheel 47 and the second drive gear wheel 49 are rotatably mounted, together with the first worm wheel 37 and the first drive gear wheel 39, on a vertical shaft 51 which is fixedly connected at an upper end thereof with a base 53 which is firmly secured to the housing 10 to form a part thereof. The second drive gear wheel 49 is in meshing engagement with a second driven gear wheel 55 which is integrally formed with an upper end portion of the cam 29. The second driven gear wheel 55 is smaller in diameter than the second drive gear wheel 49, so that upon energization of the second motor 43, the rotation of the motor 43 is transmitted to the cam 29 through the second worm shaft 45, second worm wheel 47, second drive gear wheel 49 and second driven gear wheel 55 to drive it at a reduced speed. In the illustrated embodiment, in order to make the disk 112 and the cam 29 rotate at different rotational speeds even if the rotational speeds of the first and second motors 33, 43 are the same, the teeth of the first and second drive gear wheels 39, 49 are different in number from those of the first and second driven gear wheels 41, 55, respectively. In this connection, the second motor 43, second worm shaft 45, second worm wheel 47, and second drive and driven gear wheels 49, 55 together constitute a cam driving means 42.

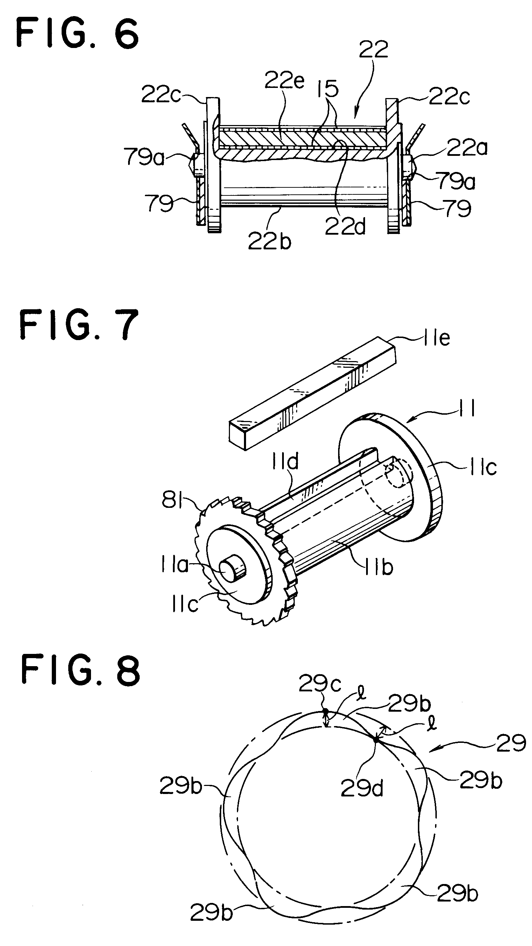

The cam 29 is formed on its outer periphery with a camming surface 29a, as clearly illustrated in Fig. 8, which has a plurality (five in the illustrated embodiment) of gradually curved radial projections 29b disposed circumferentially apart from each other at equal intervals. The radial projections 29b each have substantially a constant radial distance 1 between a crest or radially outermost point 29c and a bottom or radially innermost point 29d.

The cleaning unit 17 is separately or independently formed from the turntable 18 and the drive means 20 so that it can be removed outwardly of the housing 10. Specifically, as shown in Figs. 3 through 5, the cleaning unit 17 includes a support frame 57 having a pair of side plates 57a, 57a for rotatably supporting the opposite ends of the respective support shafts 22a, 11a and 13a of the feeding reel 22, the winding reel 11 and the presser roller 13, and a U-shaped support bracket 65 for slidably supporting the support frame 57 through a pair of slide shafts 63. The support bracket 65 is mounted on a cover or lid 61 which is hinged or otherwise appropriately connected to a bottom plate 59 for opening and closing an opening 59a formed therethrough. The opposite side plates 57a, 57a of the support frame 57 is firmly secured to the slide shafts 63 which are in turn slidably supported on the support bracket 65 through a pair of slide bearings 67, 67. The side plates 57a, 57a of the support frame 57 are connected to each other by a connection plate 57b on which is rotatably mounted a cam follower 71 in the form of a conically tapered roller through a bracket 69. The cam follower 71 has a cylindrical outer surface 71a in contact with the camming surface 29a of the cam 29, and a conical surface 71b adjacent the upper portion of the cylindrical outer surface 71a. The cylindrical outer surface 71a is urged into contact with the camming surface 29a of the cam 29 under the action of a biasing means 73 in the form of a pair of coiled springs which are disposed under compression between one side of the U-shaped support bracket 65 and an adjacent side plate 57a of the support frame 57 in a surrounding relation to the respective slide shafts 63, 63. Thus, the support frame 57 is biased by the coiled springs 73 in a direction away from the support bracket 65, i.e., in such a direction that the cam follower 71 is placed into contact with the cam 29. As a result, as the cam 29 is caused to rotate by the second motor 43, the support frame 57 together with the cleaning tape 15 is driven to reciprocate in the axial direction of the slide shafts 63, 63 relative to the support bracket 65 through the action of the cam follower 71 in contact with the cam 29.

The presser roller 13 of the cleaning unit 17 serves to urge the cleaning tape 15, which is slightly wider than a data recording surface of the disk 112, against the disk surface, and it comprises a support shaft 13a rotatably supported on the opposite side plates 57a, 57a of the support frame 57, and a cylindrical member 13b formed of an elastic material such as sponge and mounted on the support shaft 13a. The support shaft 13a has a pair of opposite ends received or engaged in a pair of elongated apertures 57c, 57c which are formed through the opposite side plates 57a, 57a of the support frame 57 in alignment with each other. The elongated apertures 57c, 57c extend in the vertical direction so as to allow a vertical movement of the presser roller 13 within the vertical length of the elongated apertures 57c, 57c. The pressure roller 13 is resiliently biased in an upward direction in Fig. 3 under the action of a biasing means 77 in the form of a flat or leaf spring which is connected with the connection plate 57b of the support frame 57 through a pair of guide members 75, 75 disposed at the opposite ends of the cylindrical member 13b. In this regard, it is preferred that the lower ends of the guide members 75, 75 be flat and that the biasing means 77 comprise a relatively wide flat or leaf spring for upwardly biasing the flat lower ends of the guide members 75, 75 in a stable manner. With this arrangement, it is possible to afford an upwardly directed biasing force to the presser roller 13 while supporting it in a stable attitude thereof without incurring fluctuations thereof.

Now, the feeding reel 22 and the winding reel 11, which are substantially of the same structure, will be described taking the feeding reel 22 as an example while referring to Fig. 6. The feeding reel 22 comprises a support shaft 22a, a cylindrical member 22b mounted on the support shaft 22a for winding the cleaning tape 15, and a pair of circular flanges 22c attached to the opposite ends of the cylindrical member 22b. The cylindrical member 22b has an axial key groove 22d formed in the cylindrical surface thereof. An end portion of the cleaning tape 15 is placed in the key groove 22d into which a key 22e is then fitted or engaged to firmly attach the tape end to the feeding reel 22. The support shaft 22a of the feeding reel 22 has the opposite ends thereof supported in a pair of substantially semicircular notches 57d, 57d, which are formed in the upper ends of the side plates 57a, 57a of the support frame 57. The ends of the support shaft 22a are also rotatably supported in a pair of bearing apertures 79a, 79a in a pair of bearing plates 79 formed of a resilient material such as steel which are attached to the adjacent side plates 57a, 57a of the support frame 57. The upper end of each bearing plate 79 is slightly bent in an outward direction so as to open gradually outward so that when the support shaft 22a of the feeding reel 22 is to be engaged from above into the bearing apertures 79a, 79a upon replacement of the cleaning tape 15, the outwardly bent portions serve to guide the opposite ends of the support shaft 22a. To this end, the opposite ends of the support shaft 22a is slightly tapered into a conical shape.

As shown in Fig. 7, one of the flanges 11c of the winding reel 11 is integrally formed on its outer peripheral surface with a ratchet 81 which has teeth formed or directed such that, when the winding reel 11 is mounted on the support frame 57, the ratchet teeth engage a tip end of an engagement pawl 85 in the form of a leaf spring, which is secured at a basal end thereof to a slider 83 to be described later, for permitting the winding reel 11 to rotate in a winding direction alone but preventing the rewinding rotation thereof. Other than this feature, the winding reel 11 is similar in structure to the feeding reel 22.

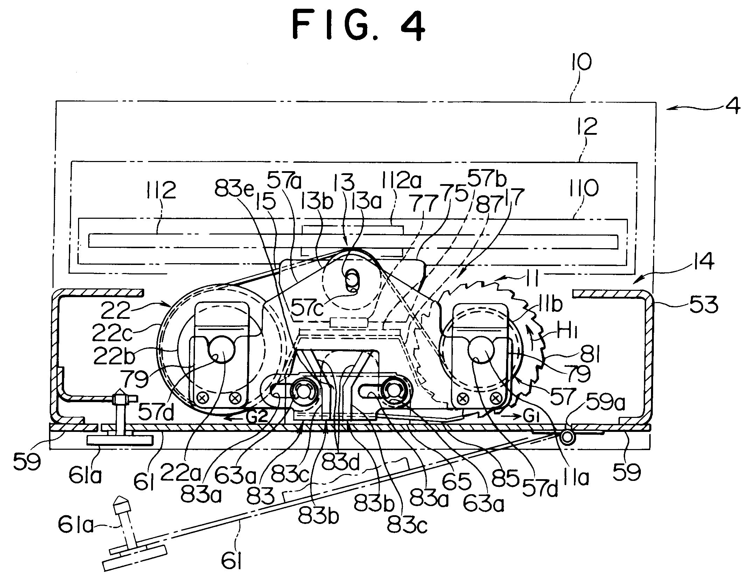

As illustrated in Figs. 2 and 4, the leaf spring 87 having a substantially trapezoidal configuration in a side view is fixedly attached at a flat central portion thereof to the lower side of the connection plate 57b of the support frame 57. The leaf spring 87 has a pair of opposite leg portions which extend downwards from the flat central portion and outwardly diverge with their tip ends being bent slightly outward so as to resiliently abut against or engageable with one of the flanges 22c of the feeding reel 22 on one hand, and the ratchet 81 of the winding reel 11 on the other hand. As a result, when the disk 112 is rotating or when the cleaning tape 15 is being wound by the winding reel 11, the cleaning tape 15 is positively prevented from being inadvertently or needlessly fed from the feeding reel 22 or rewound from the winding reel 11. That is, at the time when the winding reel 22 is winding the cleaning tape 15, one end of the leaf spring 87 abuts against one flange 22c of the feeding reel 22 and thus acts as a brake, whereby inadvertent rotation of the feeding reel 22 is suppressed, thus preventing the cleaning tape 15 from being slackened in an effective manner. On the other hand, when the cleaning tape 15 is likely to be rewound from the winding reel 11 during rotation of the disk 112, the other end of the leaf spring 87 engages the ratchet 81 of the winding reel 11 and thus prevents its reverse (i.e., rewinding) rotation.

Also, provision is made for a feeding mechanism 89 which serves to rotate the winding reel 11 to feed the cleaning tape 15 little by little. In the following, the feeding mechanism 89 will be described with particular reference to Figs. 2 and 4. An actuator 91 in the form of a rotary solenoid and the like is mounted on the base 53 of the housing 10 through a bracket 93. A yoke 97 having an engagement pin 95 at one end thereof is rotatably attached to the actuator 91 at the center thereof. Upon energization of the actuator 91, the yoke 97 is magnetically attracted thereby so as to rotate a predetermined angle, while upon de-energization of the actuator 91, it is urged to return to an original position by means of a return spring (not shown) incorporated in the actuator 91. The slider 83 is mounted on one of the side plates 57a of the support frame 57 for horizontal sliding movement. The slider 83 has a pair of elongated holes 83a, 83a formed therethrough in a horizontal aligned relation with each other and extending in a horizontal direction. Inserted into the elongated holes 83a, 83a in the sliders 83 are one ends of the corresponding slide shafts 63, 63 which are prevented from disengagement therefrom by means of stop rings 63a, 63a mounted on the those portions of the slide shafts 63 which extend outward from the corresponding elongated holes 83a, 83a. A pair of engagement projections 83b, 83b are provided on the outer surface of the slider 83 at locations between the paired elongated holes 83a, 83a. Each of the engagement projections 83b includes a vertically extending engagement portion 83c, and a guide portion 83d extending outward from the upper end of the engagement portion 83d in an outwardly bent manner. Provided on the actuator 91 is a yoke 97 which has a pin 95 formed at a lower end thereof and extending therefrom into a groove 83e between the engagement portions 83c, 83c of the paired engagement projections 83b, 83b, so that as the yoke 97 is caused to rotate a predetermined angle upon energization of the actuator 91, the slider 83 is thereby forced to move relative to the slide shafts 63, 63 in a horizontal direction (i.e., in the rightward direction in Fig. 4) perpendicular to the axis of the slide shafts 63, 63 from a position illustrated in Fig. 4 within the confines of the horizontal length of the elongated holes 83a, 83a. At this time, the engagement pawl 85, being in engagement with the ratchet 81 of the winding reed 11, rotates the ratchet 91 to feed it by one tooth thereof in a counterclockwise direction (i.e., in a winding direction) in Fig. 4, whereby the winding reel 11 is rotated to wind up the cleaning tape 15 to a slight extent. Subsequently when the actuator 91 is deenergized, the yoke 97 is caused to return to its original position under the action of the unillustrated return spring incorporated in the actuator 91. As a result, the slider 83 is moved to its original position as shown in Fig. 4 in the horizontal direction (i.e., in the leftward direction in Fig. 4) relative to the slide shafts 63, 63 and the support frame 57. In this connection, the engagement pawl 85 moves relative to the ratchet 81 just by an amount of one tooth thereof in a leftward direction in Fig. 4 into engagement with the following ratchet tooth.

The operation of the above embodiment will now be described below. First, when the disk operating apparatus is powered on, the carrier mechanism 6 is caused to move in the vertical direction along the guide shaft 5 as well as extend or contract in a horizontal direction, so that a desired one of the cartridges 110 stored in the stocker 2 is taken out therefrom, moved to a position near the disk cleaning device 4, and then inserted into the housing 10 from the inlet opening 16a in the front panel 16. Upon insertion of the cartridge 110, it is received in and held by the loading mechanism 12 with the shutter (not shown) thereof opened, as in the case of the conventional recording/reproducing device. Simultaneous with this, the unillustrated first position sensing limit switch in the loading mechanism 12 senses the insertion of the cartridge 110 so that the loading mechanism 12 is thereby operated by an unillustrated motor to pull or move the cartridge 110 into an appropriate loaded position, and then downwardly move it in a horizontal state thereof onto the turntable 18. At this time, the cartridge 110 is positioned in place with the positioning pin 53a on the base 53 being inserted into the positioning slot 110a in the cartridge 110, and at the same time, the metallic hub 112a at the center of the disk 112 received in the cartridge 110 is magnetically attracted by the circular magnet 19 and thus fixedly mounted on the turntable 18 with any movement thereof in a horizontal or radial direction being blocked by the annular stop 21 in addition to the magnetic force of the magnet 19. Thus, the disk 112 is fixedly held at a predetermined position on the turntable 18 with the upper end of the spindle 23 inserted into the central bore 112b in the hub 112a of the disk 112.

When the disk 112 is firmly mounted on the turntable 18 in this manner, a portion of a surface of the disk 112 exposed from the cartridge 110 is resiliently placed into contact with the presser roller 12, as shown in Figs. 2 and 4.

Subsequently when the cartridge 110 and the disk 112 therein are properly positioned in the above manner, an unillustrated second position sensing limit switch in the loading mechanism 12 senses this and energizes the first and second motor 33, 34 to concurrently drive the turntable 18 and the cam 29 independently of each other through the speed reduction gears 39, 41; 49, 55, respectively. As the turntable 18 rotates, the disk 112 magnetically held thereon also rotates together therewith.

On the other hand, as the cam 29 rotates, the cam follower 71, being in abutment with on the outer peripheral camming surface 29a of the cam 29, is caused to reciprocate, together with the support frame 57, relative to the support bracket 65 in the axial direction of the slide shafts 63, 63 (i.e., in directions designated by C1, C2 in Fig. 2) or radially of the disk 112 within a distance 1 between a crest 29c and a bottom 29d of the cam 29. That is, in accordance with the reciprocating motion of the support frame 57, the cleaning tape 15 reciprocatively moves through the distance 1 radially of the disk 112 while rubbing and cleaning the surface thereof. In this regard, the time of cleaning is set to a predetermined length (e.g., usually 30 - 60 seconds) by an unillustrated timer incorporated in the disk cleaning device 4. Due to the fact that a disk drive system for driving a disk 112 and a cam drive system for driving the cam 29 are formed independently or separately from each other, that is the disk-driving first motor 33 and the cam-driving second motor 43 are independent of each other, the rotation of the cleaning tape 15 has nothing to do with or is made different from that of the disk 112, so the locus of movement of the cleaning tape 15 relative to the disk surface varies irrespective of the rotational speed of the disk 112. As a result, the cleaning tape 15 can be in uniform contact with the disk surface within the reciprocating or oscillating range 1 of the tape 15, thus providing improved cleaning performance.

As the disk 112 rotates, a reactive force is applied from the disk 112 to the cleaning tape 15 in a direction to rewind the tape 15 from the winding reel 11. In this case, however, the engagement pawl 85, engaging at its tip end the ratchet 81, serves to prevent reverse or unwinding rotation of the winding reel 11 so that rewinding of the cleaning tape 15 from the winding reel 11 is thereby blocked in a positive manner.

In addition, during cleaning, the actuator 91 is driven to operate under the action of the unillustrated timer at predetermined intervals set thereby to accordingly rotate the yoke 97 together with the engagement pin 95 a predetermined angle. With this rotational motion, the slider 83 in engagement with the engagement pin 95 is moved to the right in Fig. 4 (e.g., in a direction designated by arrow G1 in Fig. 4) relative to the support frame 57, so that the engagement pawl 85 mounted on the slider 83 pushes the ratchet 81 formed at one of the flanges 11c of the winding reel 11 to the right in Fig. 4 to rotate it at an angle of just one tooth thereof in a counterclockwise direction as indicated by arrow H1 in Fig. 4. As a result, the cleaning tape 15 is wound to a slight extent around the winding reel 11, so that a soiled dirty portion of the surface of the cleaning tape 15 after having cleaned a disk surface is accordingly moved to make a new clean portion of the cleaning tape 15 into contact with the disk surface. Repeating such a tape feeding operation during cleaning, the disk surface can always be wiped and cleaned with a clean portion of the tape 15.

When a predetermined time has elapsed from the time when the cartridge 110 is mounted on the turntable 18, the first and second motors 33, 43 are deenergized or stopped through signals generated by the unillustrated timer.

Simultaneous with the deenergization of the motors 33, 43, the unillustrated motor for operating the loading mechanism 12 is energized to rotate in a reverse direction so that the loading mechanism 12 is thereby driven to operate in the reverse manner, discharging the cleaned cartridge 110 from the inlet opening 16a in the front panel 16 of the housing 10.

At this time, the unillustrated third position sensing limit switch in the loading mechanism 12 senses the discharge of the cartridge 110 and operates the actuator 91 to slightly feed the cleaning tape 15 as referred to above, so that the soiled dirty tape surface can be moved to place a new clean tape surface into contact with a new disk 112.

When a series of these operations have finished, an unillustrated sensor senses this and cuts the power supply to the actuator 91. Upon deenergization of the actuator 91, the slider 83 is caused to move to the left in Fig. 4 as indicated by arrow G2 relative to the support frame 57 to the original position shown in Fig. 4 by means of the unillustrated return spring built in the actuator 91. Thus, according to the present invention, all the above operations are carried out in an automatic fashion. After discharge of the cleaned cartridge 110, a new uncleaned cartridge is taken out from the stocker 2 and loaded into the disk cleaning device 4 where the same operations as described above are performed for cleaning the new cartridge.

When a prescribed amount of cleaning tape 15 as soiled during cleaning is wound into the winding reel 11 (i.e., the entire cleaning tape 15 has been used) as a result of repeated cleaning operations, an unillustrated sensor senses this and illuminates an unillustrated tape exchange lamp, which may be provided on the front panel 16, for warning purposes, while keeping the disk cleaning device 4 out of operation until the used cleaning tape 15 is replaced with a new one. For replacement of the used cleaning tape 15, loosening the knob 61a, the operator opens the cover or lid 61, as shown by the phantom line in Fig. 4. Upon opening the cover 61, the cam follower 71 slides in the vertical direction relative to the cam 29, and at the same time, the engagement projections 83b, 83b of the slider 83 also slide in the vertical direction relative to the engagement pin 95 of the yoke 97 to disengage therefrom, thus allowing the cleaning unit 17 mounted on the inner surface of the cover 61 to be taken out from the housing 10. With the cleaning unit 17 thus taken out of the housing 10, the operator can remove the opposite ends of the support shafts 22a, 11a of the feeding and winding reels 22, 11 from the bearing apertures 79a, 79a in the bearing plates 79, 79 while forcibly widening by hand the upper ends of the bearing plates 79, 79 firmly secured to the side plates 57a, 57a of the support frame 57, and then remove the used cleaning tape 15 together with the reels 22, 11 from the support frame 57. Thereafter, a new cleaning unit 17 is mounted on the support frame 57 in the following manner. The support shafts 22a, 11a of the reels 22, 11 of the new cleaning unit 17, which has a fresh cleaning tape 15, are pushed from above inbetween the opposed bearing plates 79, 79 to fit their opposite ends into the bearing apertures 79a, 79a in the bearing plates 79, 79. In this manner, the new reels 22, 11 are mounted on the support frame 75. Then, closing the cover 61 and fixing it to the bottom plate 59 of the housing 10 by tightening the knob 61a, the disk cleaning device 4 becomes ready for next cleaning operation. In this connection, although the cam follower 71 abuts against the outer peripheral surface 29a of the cam 29 upon closure of the cover 61 and at the same time the engagement projections 83b, 83b of the slider 83 come into engagement with the engagement pin 95 provided at the lower end of the yoke 97, the outer peripheral surface 29a of the cam 29, being tapered in the downward direction, can easily slide against the upwardly tapered outer guide surface of the cam follower 71 toward a predetermined position as shown in Fig. 2 irrespective of their first relative positions, while at the same time, the engagement pin 95 can also be fitted into the groove 83e between the upwardly and outwardly diverged engagement projections 83b, 83b of the slider 83.

Although in the above description, the cleaning tape 15 is intermittently fed little by little by the feeding mechanism 89 during cleaning of a disk 112, it can instead be fed to a slight extent after a disk 112 has been cleaned (i.e., when the rotation of a disk 112 has stopped). In addition, the feeding mechanism 89 can be constructed as follows: a motor is employed as the actuator 91, and instead of using a combination of the ratchet 81 and the engagement pawl 85, another type of power transmission mechanism such as, for example, a combination of friction rollers and a transmission belt, a combination of sprockets and a transmission chain, etc., can be employed for transmitting the rotation of the motor to the winding reel 11 at a properly reduced speed so that the cleaning tape 15 can be continuously and gradually rotated at an appropriate limited speed.

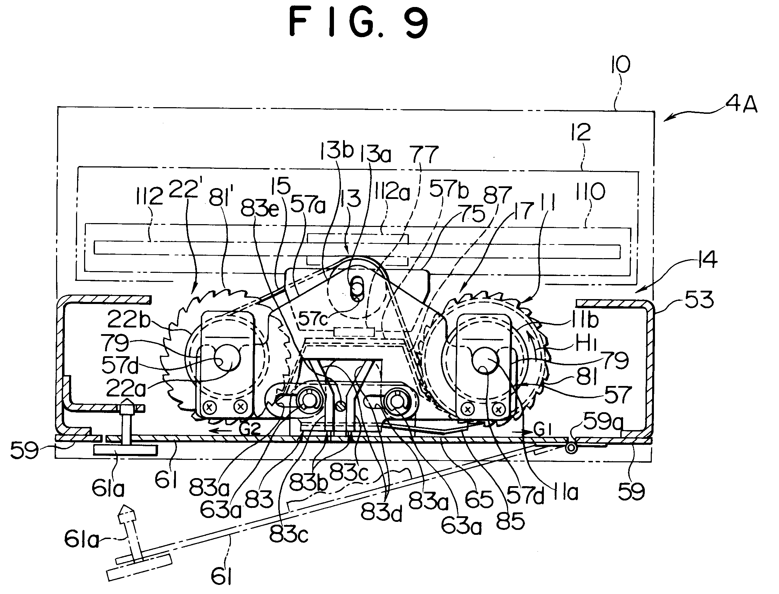

Fig. 9 shows a disk cleaning device 4A in accordance with a second embodiment of the invention. Although in the aforementioned first embodiment, one of the flanges 11c, 11c of the winding reel 11 alone is provided with the ratchet 81, according to this embodiment, a feeding reel 22' in addition to the winding reel 11 is also provided with a ratchet 81', which has a plurality of teeth inclinedly formed on the outer peripheral edge of the feeding reel 11, the direction of inclination or engagement of the teeth of the feeding reel ratchet 81' being the same as that of the ratchet teeth of the winding reel 11 for the purpose of enabling the opposite surfaces of the cleaning tape 15 to be used. Specifically, when one side surface of the cleaning tape 15 has been used, the winding reel 11 and the feeding reel 22' are remounted on the support frame 57 while exchanging their positions with each other with the cleaning tape 15 being reversed or turned upside down. With this operation, the opposed unused clean surface of the cleaning tape 15 can be used. In this regard, even if the mounting positions of the feeding and winding reels 22', 11 are exchanged in this manner, there will be no problem since the reel 22' now acting as a winding reel and provided with the ratchet 81', which is engaged by the engagement pawl 85 and which has the same direction of inclination or engagement of the ratchet teeth as that of the ratchet 81 of the reel 11, is allowed to rotate in the tape winding direction but it is prevented from reverse rotation in the tape rewinding direction by means of the engagement pawl 85.

Moreover, in order to enable the use of the opposite surfaces of the cleaning tape 15 in this manner, it is only necessary to form the winding reel 11 and the feeding reel 22' into the same construction so that the mounting positions thereof can be exchanged with each other.

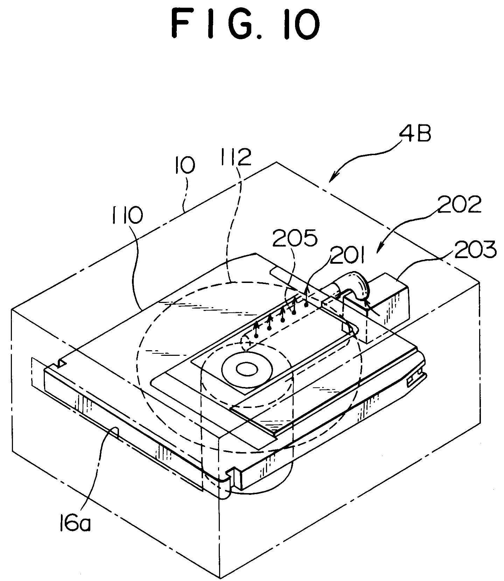

Fig. 10 shows in a perspective view a disk cleaning device 4B in accordance with a further embodiment of the present invention. In this embodiment, the device 4B, which is substantially of the same construction as the device 4 shown in Figs. 2 through 8, is further provided with a static eraser. In the illustrated embodiment, the details of the device 4B already described with reference to the previous embodiment as shown in Figs. 2 through 8 are omitted for the sake of simplification and clarity in explanation. The static eraser comprises an ion supplying means 202 for supplying or blowing streams of ions 201 onto that portion of a surface of the disk 112 which is exposed from the cartridge 110. The ion supplying means 202 includes an ion supply 203, and an ion supply pipe 205 connected with the ion supply 203 and disposed below and in parallel with a lower surface of the disk 112 in the cartridge 110 which is located at a prescribed cleaning position in the housing 10, i.e., at a predetermined mounting position in which the cartridge 110 is mounted on an unillustrated turntable. When the cartridge 110 is inserted into the housing 10 through an inlet opening 16a in a front panel 16 and placed in position on the turntable for cleaning, a flow of ions fed from the ion supply 203 to the ion supply pipe 205 is jetted toward a surface of the disk 112 through a plurality of fine holes formed through an upper portion of the pipe 205 to electrically neutralize and remove static electricity which is generated on the disk surface due to frictional contact thereof with the cleaning tape. In this manner, it is possible to effectively prevent dust once removed by the cleaning tape from being again electrostatically attracted to the cleaned disk surface.

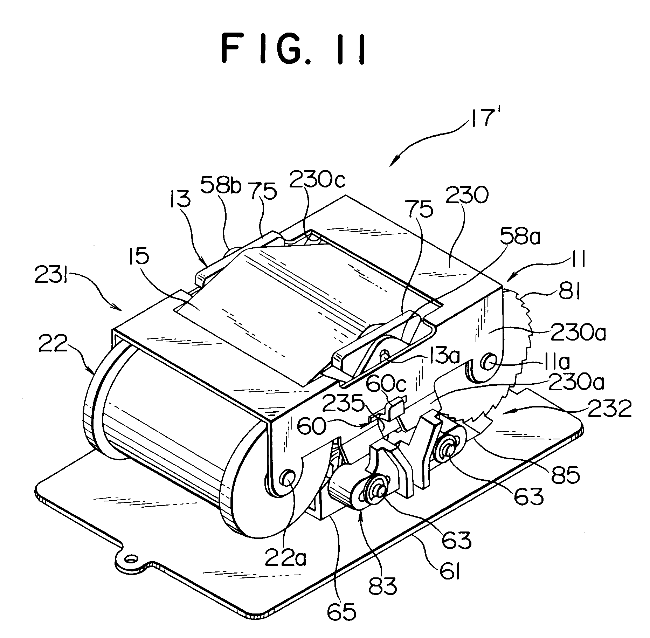

Figs. 11 through 18 show a disk cleaning device 4C in accordance with a yet further embodiment of the invention. In this embodiment, the disk cleaning device 4C is partially different in construction from the device 4 of Figs. 2 through 8. Specifically, a winding reel 11 and a feeding reel 22 having a cleaning tape 15 wound therearound are integrally received in a casing in the form of a reel holder 230 to provide a cleaning tape cassette 231, which can be detachably supported on a support mechanism 232.

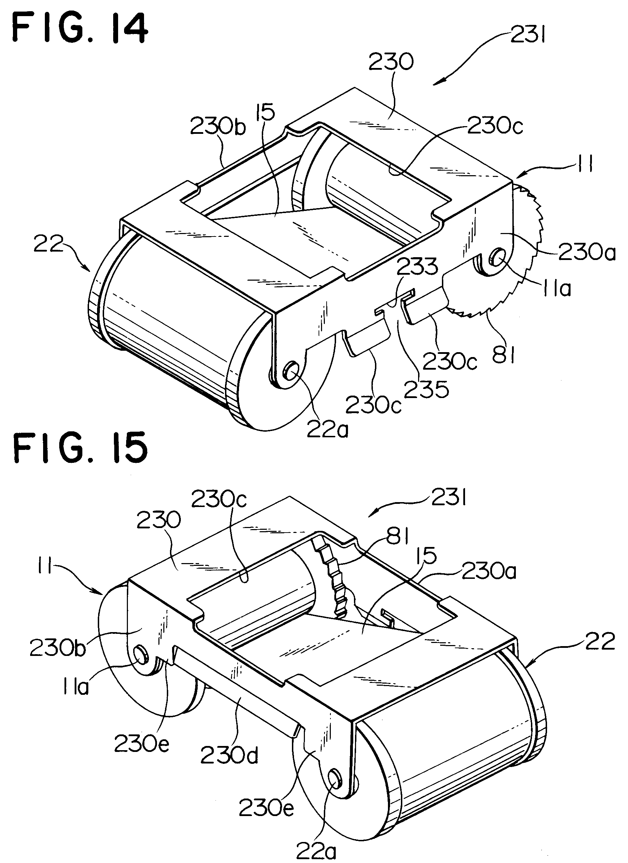

As illustrated in Figs. 14 and 15, the cleaning tape cassette 231 has a width slightly greater than those of the feeding reel 22 and the winding reel 11. The cleaning tape cassette 231 is constructed such that support shafts 22a, 11a of the feeding and winding reels 22, 11 are rotatably supported at their opposite ends by a pair of opposite side plates 230a, 230b of the reel holder 230 having a rectangular shape in a plan view with the reels 22, 11 disposed between the side plates 230a, 230b. The cleaning tape 15 having one end connected with and wound around the feeding reel 22 is connected with the winding reel 11 in a diagonal or crossed manner, as illustrated in Figs. 14 and 15, such that when the cleaning tape 15 is being fed from the feeding reel 22 toward the winding reel 11, the feeding and winding reels 22, 11 rotate in the mutually opposite directions to each other. The cleaning tape 15 and the feeding and winding reels 22, 11 themselves are constructed substantially in the same manner as those of Figs. 5 through 7. The reel holder 230 has a rectangular opening 230 formed in the upper surface thereof, through which the cleaning tape 15 is upwardly pushed out, when the cleaning tape cassette 231 is mounted on the support mechanism 232, from the upper surface of the reel holder 230 by means of a presser roller 13 into contact with a surface of the disk 112 exposed from the cartridge 110. As shown in Figs. 14 and 15, the reel holder 230 is integrally formed on its side surfaces 230a, 230b with a pair of guide members 230c, 230d which are slightly outwardly bent for facilitating the mounting of the reel holder 230 on a support frame 57'. As clearly seen from Fig. 14, the guide member 230c is formed in the center thereof a notch 235 which has at its upper edge a downwardly opened engagement groove 233 connected therewith. The engagement groove 233 has a width greater than that of the notch 235. As shown in Fig. 15, the other side portion 230b of the reel holder 230 has a pair of frame receivers 230e, 230e integrally formed therewith at locations near the opposite ends of the guide member 230d, the frame receivers 230e, 230e being placed into abutment with one side surface of the support frame 57' when the reel holder 230 is mounted thereon.

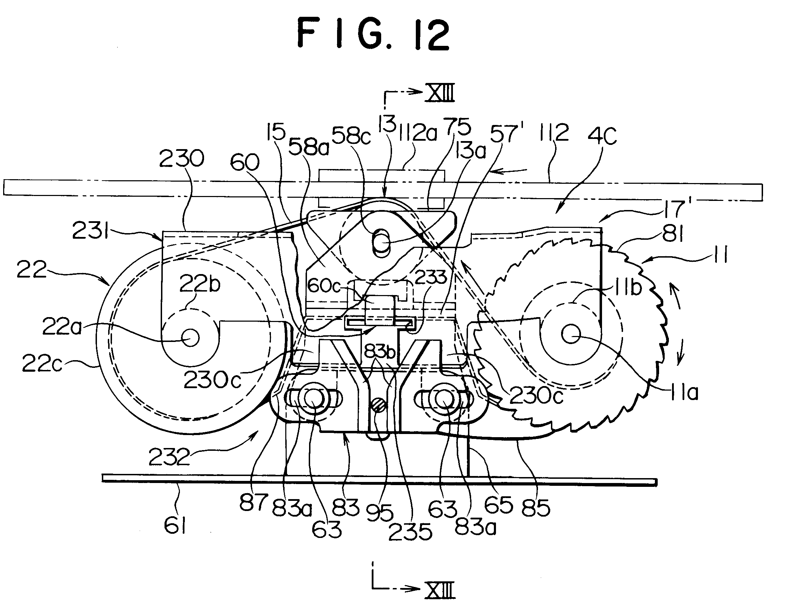

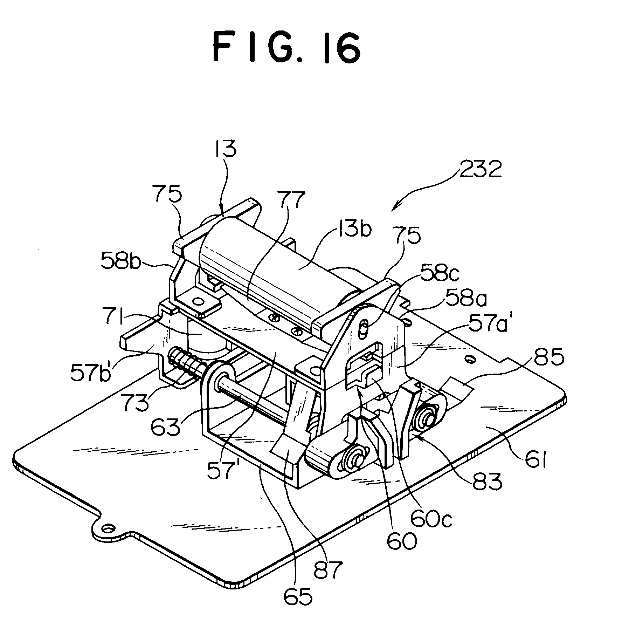

As can be seen from Figs. 11 through 13 and Fig. 16, the support mechanism 232 for supporting the cleaning tape cassette 231 is substantially similar in construction to the one as shown in Figs. 2 through 5, but it is different therefrom in that the support frame 57' does not directly support the feeding reel 22 and the winding reel 11 but instead detachably support them. More specifically, as is evident from Figs. 12 and 16, the support frame 57' is slidably supported through a pair of slide shafts 63, 63 on a support bracket 65 of a U-shaped cross section which is hinged or otherwise connected to the cover 61. The inverted U-shaped support frame 57' has a pair of downwardly bent side plates 57a', 57b' fixedly secured to the slide shafts 63, 63 each of which is slidably supported on the support bracket 65 through a pair of slide bearings 67, 67. Mounted on one side plate 57a' of the support frame 57' is a slider 83 for horizontal sliding movement which has an engagement projection 83b engageable with an engagement pin 95 provided at the lower end of a yoke 97 of an actuator 91. Integrally formed with the other side plate 57b' of the support frame 57' is a bracket 69 having an upright support shaft 69a on which a cam follower 71 in the form of a tapered roller is rotatably mounted. The cam follower 71 is urged into abutment at its cylindrical outer surface 71a against a camming surface 29a of the cam 29 (see Fig. 2) under the action of a biasing means 73 in the form of a pair of coiled springs which are disposed under compression between one side of the support bracket 65 and the adjacent side 57b' of the support frame 57' in a surrounding relation with one end portions of the corresponding slide shafts 63.

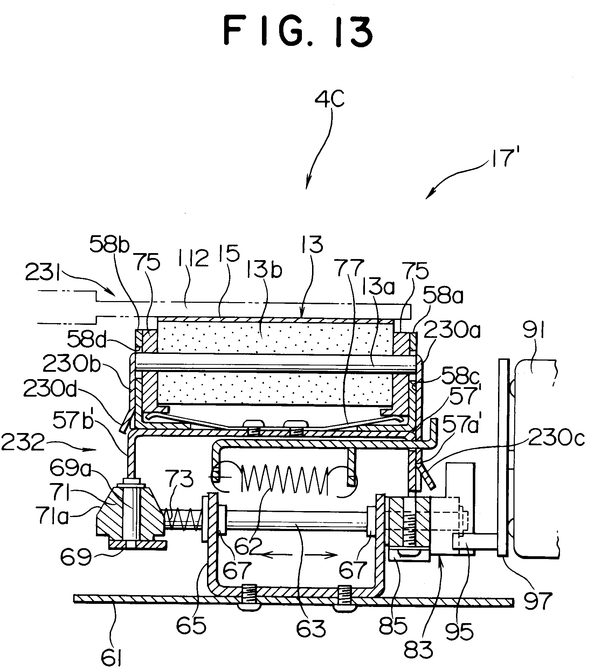

Fixedly attached to the upper surface of the support frame 57' are a pair of support plates 58a, 58b in a spaced and opposed relation with each other, which have a pair of vertically extending elongated apertures 58c, 58d respectively formed therethrough. One support plate 58a has an outer side surface thereof disposed in flush with the outer surface of the adjacent side plate 57a' of the support frame 57', whereas the other support plate 58b has an outer side surface thereof disposed slightly inward of the other side plate 57b′ of the support frame 57. A support shaft 13a of the presser roller 13 has the opposite ends thereof fitted into the elongated apertures 58c, 58d in the support plates 58a, 58b for rotation and vertical movement relative thereto. Between the opposite end faces of the presser roller 13 and the respective support plates 58a, 58b, there are disposed a pair of guide members 75, 75 through which the presser roller 13 is resiliently urged in the upward direction in Fig. 13 by a biasing means 77 such as a flat or leaf spring attached to the support frame 57′.

The presser roller 13 of the cleaning unit 17′ includes a support shaft 13a rotatably supported at its opposite ends by the opposite support plates 58a′, 58b′ of the support frame 57′, and a cylindrical member 13b formed of a hygroscopic and resilient material such as sponge mounted on the support shaft 13b.

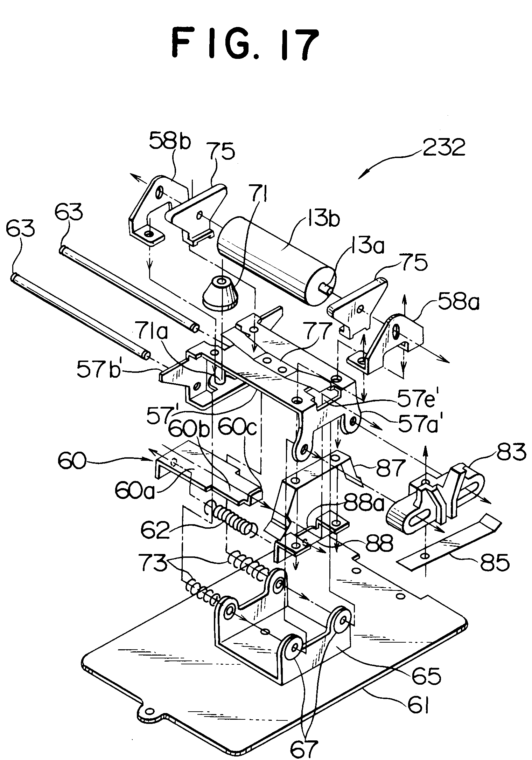

As clearly seen from Figs. 13, 16 and 17, on the lower surface of the support frame 57′, there is attached a cassette fastening plate 60 for fixedly mounting the reel holder 230 of the cleaning tape cassette 231 on the support frame 57′. As evident from Fig. 17, the cassette fastening plate 60 includes a relatively wide rectangular-shaped first portion 60a, a rectangular-shaped second portion 60b integrally formed with the first portion 60a and being smaller in width than the first portion 60a, and a third tip portion integrally formed with the second portion 60b and being smaller in width than the second portion 60b. The width of the second portion 60b is substantially equal to that of the engagement groove 233 formed in the reel holder 230 so that upon mounting of the cleaning tape cassette 231, the second portion 60b is fitted into the engagement groove 233 in the reel holder 230 to fasten or fix it to the support frame 57′. The third tip portion 60c of the cassette fastening plate 60 is upwardly bent at a location intermediate the ends thereof, whereas the first portion 60a thereof is downwardly bent to form a spring retainer to which a tension spring 62 such as a coiled spring is connected at one end thereof.

Also, a flat or leaf spring 87, which has substantially a trapezoidal configuration including a central portion and a pair of opposite leg portions extending from the opposite ends of the central portion in an outwardly diverging manner, is fixedly attached to the lower surface of the support frame 57′ through a spring mounting plate 88 of an inverted L-shaped cross section. The spring mounting plate 88 has a lower bent portion extending downwards from the support frame 57′. The lower bent portion has a guide hole 88a formed therethrough at the center thereof for guiding axial movement of the presser roller 13. The width of the guide hole 88a is smaller than that of the first portion 60a of the cassette fastening plate 60, but greater than that of the second portion 60b. In addition, the tension spring 62, which is connected at its one end with the downwardly bent spring retainer of the cassette fastening plate 60, is connected at the other end thereof with the spring mounting plate 88.

One side plate 57a of the support frame 57′ has an opening 57e′ which has a width substantially equal to that of the first portion 60a of the cassette fastening plate 60. The tip end portion 60c of the cassette fastening plate 60 is biased in a direction to project outwardly through the guide hole 88a in the spring mounting plate 88 and further through the opening 57e′ in the support frame 57′ under the action of the tension spring 62 disposed under tension between the cassette fastening plate 60 and the spring mounting plate 88. In this regard, the widest first portion 60a of the cassette fastening plate 60 is in abutment at its shoulder or step formed between the first and second portions 60a, 60b against the lower bent portion of the spring mounting plate 88 to prevent the cassette fastening plate 60 from being excessively projected out of the opening 57e′ in the support frame 57′.

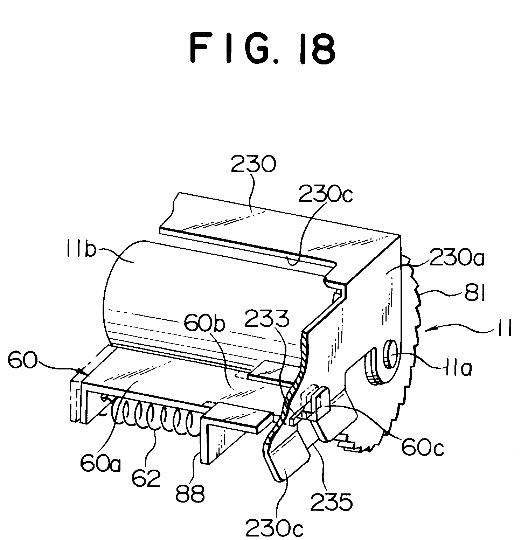

The cleaning tape cassette 231, when used up, can be replaced with a new one in the following manner. First, an operator opens the cover 61 hinged to the bottom plate (not shown) of the housing 10, and takes out the cleaning unit 17′ mounted on the cover 61 from the housing 10 (see Fig. 11). Then, the operator pushes in by hand the upwardly bent tip portion 60c of the cassette fastening plate 60 extending outwardly of one side plate 230a of the reel holder 230, as shown by the phantom line in Fig. 18, so that the second portion 60b of the cassette fastening plate 60 is receded from the engagement groove 233 in the reel holder side plate 230a to release the engagement therebetween. In this state, holding up the reel holder 230, the operator can move the narrowest tip portion 60c of the cassette fastening plate 60 in the downward direction relative to the reel holder side plate 230a within the notch 235 therein, so he or she can remove the cleaning tape cassette 231 from the support frame 57′.

Subsequently, as shown in Figs. 14 and 15, a new cleaning tape cassette 231 having a fresh cleaning tape 15 is mounted on the support frame 57′ from above in the following manner. First, as the reel holder 230 moves in the downward direction, the third upwardly bent tip portion 60c of the cassette fastening plate 60 is inserted into the notch 235 in the reel holder side plate 230a, and at the same time, the slightly outwardly bent guide portion 230c of the reel holder side plate 230a comes into abutment against a shoulder or step formed between the second and third portions 60b, 60c of the cassette fastening plate 60 and gradually pushes in the cassette fastening plate 60. When the third portion 60c of the cassette fastening plate 60 comes into engagement with the engagement groove 233 in the reel holder side plate 230a, the tip of the second portion 60b of the cassette fastening plate 60 is inserted into the engagement groove 233 to project therefrom until the shoulder or step of the second portion 60b abuts against the downwardly bent portion of the spring mounting plate 88. In this manner, the reel holder 230 is fixedly held by the support frame 57'. On the other hand, the other side plate 230b of the reel holder 230 abuts, at the frame receiving portions 230e, 230e formed on the opposite sides of the central guide portion 230d, against the adjacent side plate 57b' of the support frame 57', whereby the opposite side plates 230a, 230b of the reel holder 230 firmly hold the pair of support plates 58a, 58b on the upper surface of the support frame 57', thus firmly mounting the reel holder 230 on the support frame 57'. In this connection, upon mounting of the cleaning tape cassette 231 in this manner, the guide portions 230c, 230d of the opposite side plates 230a, 230b of the support frame 57' serve to guide the engagement of the reel holder side plates 230a, 230b with the guide plates 58a, 58b on the support frame 57' to facilitate the mounting of the reel holder 230.

After a new cleaning tape cassette 231 has been mounted on the support frame 57' in this manner, the cover 61 is closed and fixed to the housing bottom plate (not shown). Upon completion of the above operations, the disk cleaning device 4C becomes ready for next disk cleaning operation. Here, it is to be noted that the operations and construction of this embodiment other than above are substantially the same as those of the aforementioned Figs. 2 through 8 embodiment.

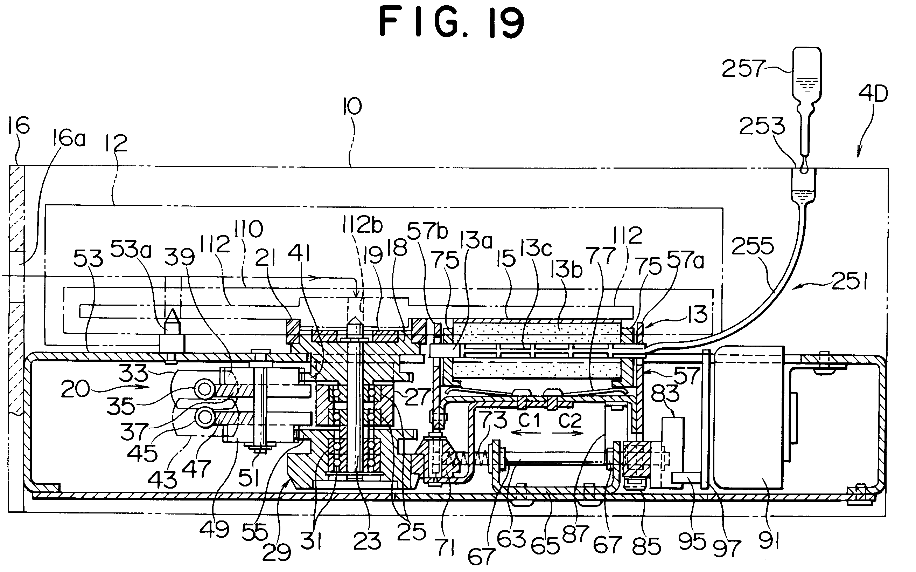

Fig. 19 shows a disk cleaning device 4D in accordance with a further embodiment of the invention. In this embodiment, there is provided a cleaning liquid supplying mechanism 251 for supplying a liquid such as water, a cleaning liquid, etc., to a cleaning tape 15 to moisten it for improved cleaning performance. To this end, according to this embodiment, a presser roller 13 for urging the cleaning tape 15 into contact with a disk surface includes a support shaft 13a, and a cylindrical member 13 formed of a liquid absorbing resilient material such as sponge for absorbing liquid and mounted on the support shaft 13a for contacting on its outer peripheral surface the surface of a disk 112 from a radially inner to a radially outer portion thereof in quite a uniform manner. Inside the support shaft 13, there is formed a supply passage means 13 comprising a plurality of supply passages for supplying liquid to the cylindrical member 13b. On an upper plate of a housing 10 of the disk cleaning device 4D, there is provided a supply port 253 which is connected through a tube 255 to the supply passages 13c in the support shaft 13a.

In operation, before a cartridge 110 is inserted into the disk cleaning device 4D, a liquid such as water, a cleaning liquid, etc., is poured from a supply means such as a spuit 257 into the supply port 253 in the upper surface of the housing 10. The liquid thus supplied flows from the supply port 253 to the supply passages 13c in the support shaft 13a through the tube 255, and thence it permeates into the hygroscopic cylindrical member 13b in the form of sponge or the like to moisten the cleaning tape 15 which is in contact with the outer peripheral surface of the cylindrical member 13b. Thereafter, a cartridge 110 is inserted into the disk cleaning device 4D through the inlet opening 16a in the front panel 16 of the housing 10 so that it is received in or held by the loading mechanism 12 with a shutter (not shown) thereof being opened. At this time, an unillustrated switch or sensor (not show) provided in the loading mechanism 12 is operated to sense the insertion of the cartridge 110, and energize an unillustrated motor of the loading mechanism 12 so that the loading mechanism 12 is thereby operated to load the cartridge 110 into the housing 10 and then downwardly move it onto the turntable 18 while keeping the cartridge 110 in a horizontal attitude. As the cartridge 110 moves downwardly, a disk 112 received in the cartridge 110 is magnetically attracted by the circular magnet 19 on the upper surface of the turntable 18 with the central bore 112b in the disk 112 being inserted and positioned in place by the spindle 23. Simultaneous with this, in a window of the cartridge 110 which is opened by the shutter, the disk 112 is lightly placed into pressure contact with the cleaning tape 15. In this state, the disk 112 is driven to rotate and at the same time the cleaning tape 15 is reciprocated in a radial direction so that the surface of the disk 112 is cleaned by the moistened or wet cleaning tape 15. In this connection, even strong dust such as oily or sticky adherents, which are attached to the disk surface with strong adhesive forces, can be clearly removed in a highly effective manner by rubbing the disk surface with the wet cleaning tape 15 while moistening it. In this regard, the supply port 253 and the tube 255 together constitute a liquid supply system for supplying liquid to the supply passages 13c.

Although in the above embodiment, the cleaning tape 15 is wetted or moistened by liquid such as water or a cleaning liquid which, prior to cleaning the disk 110, is supplied to the roller 13 from the outside through the supply port 253, the tube 255 and the supply passages 13c, the cleaning tape 15 itself can be directly moistened in advance.

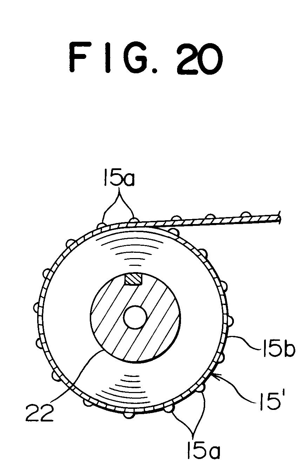

Such an example is shown in Fig. 20 in which there is illustrated in a vertical cross section a modified form of cleaning tape 15'. In this modification, the cleaning tape 15' comprises a hygroscopic substrate 15b in the form of cloth, fabric or the like having a multitude of microcapsules 15a formed thereon. The microcapsules 15a are disposed on one surface of the hygroscopic substrate 15b and mutually spaced from each other at appropriate intervals in the longitudinal direction of the cleaning tape 15' (i.e., in the tape-feeding direction). The microcapsules 15a are each formed of a bulged thin film containing therein a cleaning liquid such as water, alcohol, etc., and fabricated such that when applied by pressure, heat or the like, they can be easily disrupted to permit the cleaning liquid therein to elude outward. That is, when the cleaning tape 15′ is placed into contact with the disk surface, some of the microcapsules 15a are ruptured due to contact pressure therebetween or frictional heat generated by frictional engagement therebetween, whereby the cleaning liquid contained therein eludes or comes out therefrom and is fed to the disk surface which is then rubbingly cleaned by the cloth or fabric substrate 15b. Thereafter, the winding reel (not shown) is slightly rotated to feed the cleaning tape 15′ from the feeding reel 22 so that dry portions between longitudinally adjacent microcapsules 15a of the substrate 15b can wipe the cleaning liquid on the disk surface. In this manner, moistening the surface of the cleaning tape 15′ and hence the disk surface with a cleaning liquid is very much efficient and effective for removing highly sticky or oily adherents or dust from the disk surface.

Although in the above embodiment, the cleaning tape 15′ is formed of a cloth or fabric substrate 15b having a plurality of microcapsules 15a formed on the surface thereof at predetermined intervals, the present invention is not limited to this, but the microcapsules 15a can be disposed in any other manner as required. Also, if an evaporative liquid such as alcohol is employed as the cleaning liquid, there will be no need to wipe the wet surface of the disk moistened by the cleaning liquid, so in this case, microcapsules 15a can be disposed more closely or densely, or with no spacing therebetween over the entire surface of the cleaning tape.

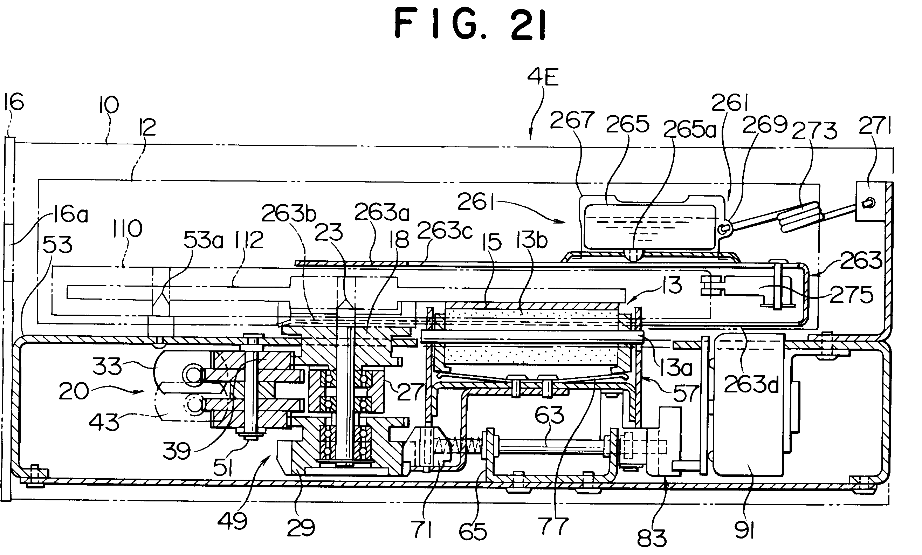

Figs. 21 through 24 show a disk cleaning device 4E in accordance with a further embodiment of the invention. In this embodiment, a cleaning liquid supplying mechanism 261 is provided for supplying a cleaning liquid to a cleaning tape 15 in response to a cartridge 110 being mounted on a turntable 18 by means of a loading mechanism 261.

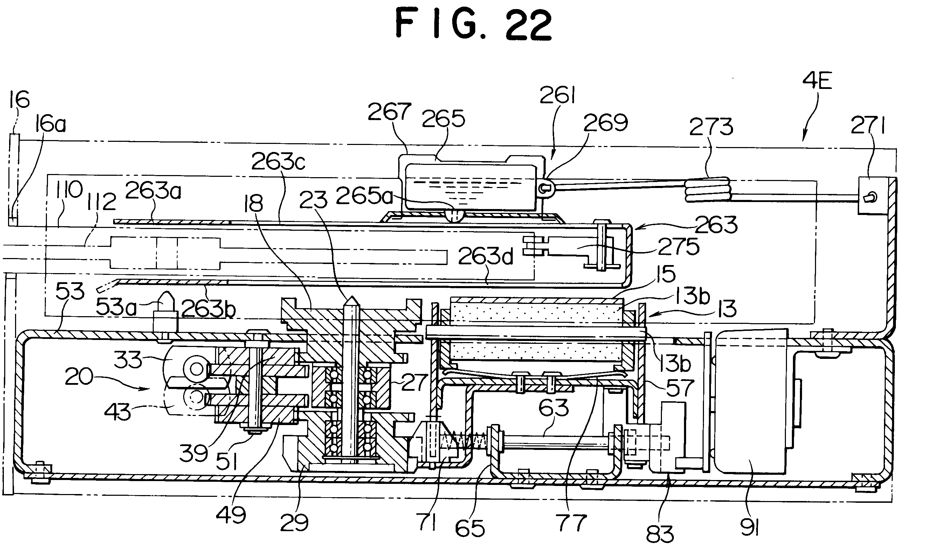

The construction of this cleaning liquid supplying mechanism 261 will first be described below. In this embodiment, the loading mechanism 12 includes a substantially C-shaped loading tray 263 for receiving and holding therein a cartridge 110 for loading and unloading thereof. The loading tray 263 includes a pair of upper and lower plates 263a, 263b each in the form of a rectangular configuration which have a pair of apertures 263c, 263d, respectively, formed therethrough to extend from the center of the disk 112, when it is received in the tray 263, to near a rear end of the loading tray 263. On the upper plate 263a of the loading tray 263 across the apertures 263c, 263d therein, there is disposed a box-shaped cleaning liquid storage vessel or tank 265 for storing a cleaning liquid, the storage vessel 265 being detachably and resiliently fixed to the upper plate 263a by means of an inverted U-shaped flat spring 267 which has an inwardly concave upper surface and a pair of inwardly concave side surfaces. The vessel 265 is formed of an elastic material which is easily deformable due to external forces and can restore its original shape upon removal of the external forces. Under the vessel 265 there is disposed a supply nozzle 265a such as a fine pipe or aperture for supplying the cleaning liquid in the vessel 265 to the cleaning tape 15 in accordance with the deformation of the vessel 265 while preventing it from dropping under normal or atmospheric pressure as long as the vessel 265 remains not deformed or is in its original shape. The vessel 265 is disposed such that when the loading tray 263 is in the rearmost or receded position in the housing 10, the supply nozzle 265a is disposed slightly outside of the outer peripheral portion of the disk 112 within the aperture or widow 110b in the cartridge 110 at a location in confrontation with that end of the presser roller 13 which is near the turntable 18. Further, on the rear portion of the vessel 265 there is provided a spring mounting portion 269 with which one end of a spring 273 such as a twisted spring is connected, the other end of the spring 273 being connected with a spring mounting portion 271 provided at one side of the housing 10, so that the spring 273 functions to apply an external force to the vessel 265 to deform it in accordance with movements of the loading tray 263 between a receded position of Fig. 21 and an advanced position of Fig. 22. In addition, a lever 275 is provided on the rear end of the loading tray 263 for opening the shutter 113 of the cartridge 110 upon loading thereof into the loading tray 263. In this connection, the spring 273 constitutes a means for causing the cleaning liquid in the vessel 265 to be supplied to the cleaning tape 15 in response to the cartridge 110 being loaded into the loading tray 263.

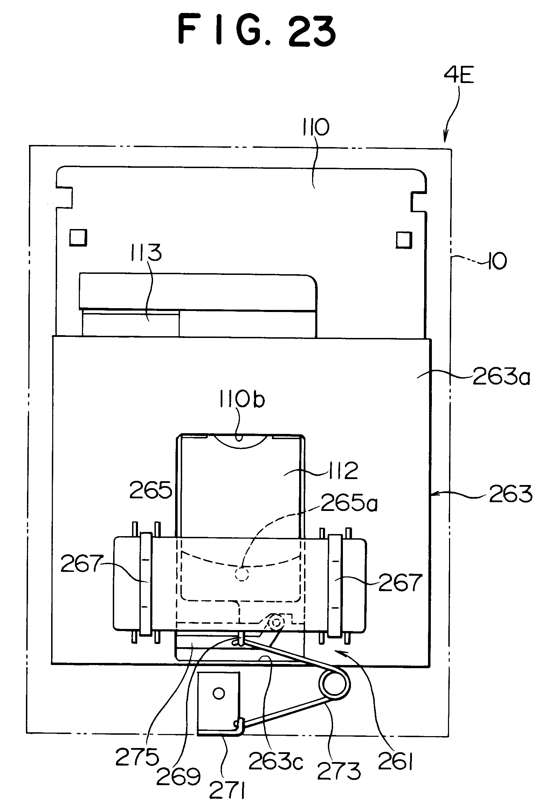

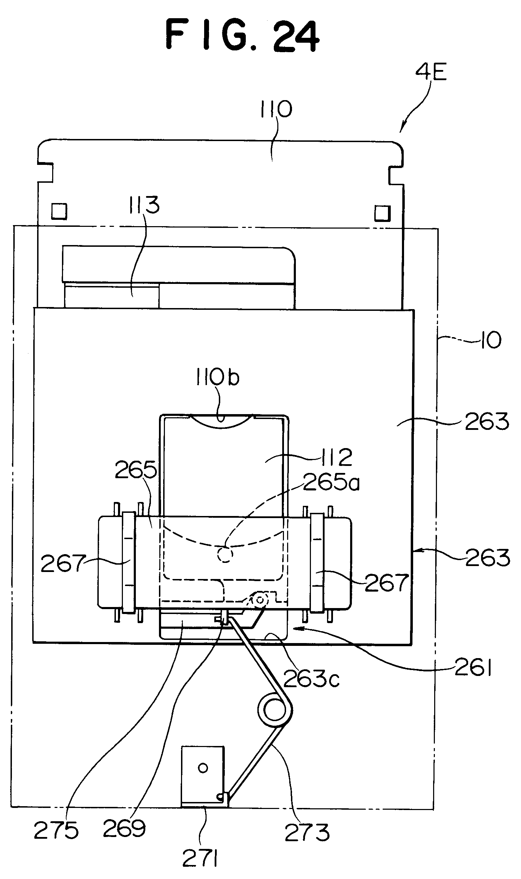

In operation, after the disk cleaning device 4E is powered on, a cartridge 110 is pushed into the loading tray 263 through the inlet opening 16a in the front panel 16 by about two thirds of the cartridge length, as shown in Figs. 21 and 23, whereupon the shutter 113 of the cartridge 110 is opened by the lever 275. At the same time, the loading mechanism 12 is driven by the unillustrated motor to pull the cartridge 110 together with the loading tray 263 into the housing 10 as shown in Figs. 22 and 24. Thereafter, the cartridge 110 is moved down onto the turntable 18 at a horizontal attitude thereof.

In accordance with this movement of the loading tray 263 from the advanced position of Figs. 22 and 24 to the receded position of Figs. 21 and 23, the spring 273 continues to be compressed to increase its returning force. As a result, one side of the vessel 265 of the cleaning liquid supplying mechanism 261 is gradually and elastically deformed by virtue of the increasing returning force of the spring 273 in a direction to reduce the volume thereof. As the volume of the vessel 265 decreases, the pressure therein increases in reverse proportion thereto so that the cleaning liquid in the vessel 265 is forcedly pushed out of the supply nozzle 265a in the vessel bottom to drop through the openings 263c, 263d in the upper and lower surfaces 263a, 263b of the loading tray 263 onto the cleaning tape 15 in a state of droplets like an eye lotion from an eyedropper to infiltrate into it. Such a liquid dropping operation continues as long as the cartridge 110 is being loaded into the housing 10. In this regard, the vessel 265 moves together with the loading tray 263, so that the cleaning liquid is fed drop by drop to the cleaning tape 15 to infiltrate thereinto from side to side or in a widthwise direction of the cleaning tape 15.

When the cartridge 110 has been mounted in place on the turntable 18 while the cleaning tape 15 is moistened or wetted with the cleaning liquid in the above manner, the disk 112 comes into contact with the cleaning tape 15 while lightly pushing it down. Then, the motor 33 is energized to start rotatingly driving the turntable 18 and the cam 29 so that the disk 112 in the cartridge 110 is caused to rotate and at the same time the cleaning tape 15 is also caused to oscillate or reciprocate in a radial direction of the disk 112, thus rubbing and cleaning the disk surface. In this connection, the cleaning liquid infiltrated into the cleaning tape 15 of hygroscopic cloth or fabric is coated onto the disk surface in a uniform manner, so even strong or very sticky dust can be clearly removed from the disk surface.

After the cleaning has finished, the motor 33 is deenergized to stop the rotation of the disk 112 and the oscillation of the cleaning tape 15 as well. Simultaneous with this, the loading mechanism 12 is operated in the reverse manner, e.g., by reversing the motor, to transport or discharge the cartridge 110 to the outside from the inlet opening 16a. In accordance with this discharging movement of the loading mechanism 12, the compressive force applied to the spring 173 is gradually removed or decreases to allow the deformed vessel 265 to restore to its original configuration under its own elasticity. That is, as the deformation of the vessel 265 decreases, the volume of the vessel 265 gradually increases from its compressed or reduced state. As a result, the pressure in the vessel 265 tends to decrease below the atmospheric pressure, but in this case, ambient air flows into the vessel 265 through the supply nozzle 265a until the pressure in the vessel 265 becomes equal to the atmospheric pressure, thus returning the deformed vessel 265 to its original shape. In this manner, even where a multitude of cartridges 110 are loaded into and unloaded from the disk cleaning device 4E in a repeated manner, the cleaning liquid is automatically dropped to the cleaning tape 15 upon loading of each cartridge.

Further, when the cleaning liquid in the vessel 265 is depleted, the fastening flat spring 267 is removed or detached so that the vessel 165 can be dismantled and taken out of the housing 10 for replenishment of new cleaning liquid or replacement of the empty vessel 265 with a new one filled with fresh cleaning liquid.

## Claims

1. A disk operating apparatus comprising:
   a stocker for storing a multitude of disk cartridges each receiving therein a disk which acts as an information recording medium;
   a recording/reproducing device disposed in alignment with said stocker for recording and reproducing pieces of information into and from the disk in a cartridge;
   a disk cleaning device disposed in alignment with said stocker and said recording/reproducing device for cleaning a surface of the disk in a cartridge; and
   a cartridge transporting mechanism for transporting a cartridge to and from said stocker, said recording/reproducing device and said disk cleaning device.

2. A disk operating apparatus according to claim 1, wherein said disk cleaning device includes static electricity removing means for removing static electricity charged on the disk in a cartridge.

3. A disk operating apparatus according to claim 1 or 2, wherein said recording/reproducing device and said disk cleaning device have substantially the same outer configuration and dimensions so that they can be installed between opposite side plates of said stoker in alignment with each other.

4. A disk cleaning device comprising:
   a housing;
   a loading mechanism in said housing for loading into and unloading from said housing a cartridge which receives a disk therein; and
   a cleaning mechanism for cleaning the disk in a cartridge loaded into said housing by said loading mechanism;
   said cleaning mechanism comprising:
   a turntable rotatably supported in said housing for fixedly holding a cartridge thereon with a portion of a surface of the disk in said cartridge being exposed therefrom;
   driving means for driving said turntable to rotate;
   a cleaning tape having one end thereof connected with a feeding reel and the other end thereof connected with a winding reel, said cleaning tape being resiliently biased by means of a presser roller into contact at a portion thereof between said feeding and winding reels with the exposed surface portion of the disk in said cartridge for cleaning thereof; and

a feeding mechanism for rotating said winding reel in a direction to wind up said cleaning tape therearound.

5. A disk cleaning device according to claim 4, wherein said feeding mechanism comprises means for intermittently rotating said winding reel little by little in a direction to wind said cleaning tape therearound.

6. A disk cleaning device according to claim 4, wherein said feeding mechanism comprises means for continuously and gradually rotating said winding reel in a direction to wind said cleaning tape therearound.

7. A disk cleaning device according to claim 4, 5 or 6, further comprising means for moistening said cleaning tape.

8. A disk cleaning device according to claim 7, wherein said means for moistening said cleaning tape comprises a multitude of microcapsules formed on a surface of said cleaning tape and containing therein a cleaning liquid.

9. A disk cleaning device according to claim 8, wherein said microcapsules are disposed on the cleaning tape surface at predetermined intervals in a longitudinal direction.

10. A disk cleaning device according to claim 7, wherein said presser roller comprises a support shaft, and a hygroscopic cylindrical member mounted on said support shaft, and wherein said means for moistening said cleaning tape comprises supply passage means provided in said support shaft and communicating with a cylindrical outer peripheral surface of said support shaft via through holes formed therethrough, and a supply system for supplying liquid to said supply passage means.

11. A disk cleaning device according to claim 7, wherein said means for moistening said cleaning tape comprises a cleaning liquid supplying mechanism for supplying a cleaning liquid to said cleaning tape in response to a cartridge loading operation of said loading mechanism.

12. A disk cleaning device according to claim 11, wherein said cleaning liquid supplying mechanism comprises:

a storage vessel disposed on said loading mechanism and having a supply nozzle directed toward said cleaning tape; and

supply means for supplying a cleaning liquid from said storage vessel to said cleaning tape in response to a cartridge loading operation of said loading mechanism.

13. A disk cleaning device according to claim 12, wherein said storage vessel is formed of an elastic material in such a manner that it is elastically deformable by application of an external force, said supply means being operable to elastically deform said storage vessel to supply a cleaning liquid therefrom to said cleaning tape through said supply nozzle in response to a cartridge loading operation of said loading mechanism.

14. A disk cleaning device according to any of claims 4 to 13, wherein said feeding and winding reels, said presser roller and said cleaning tape are formed into a single cleaning unit independently of said turntable and said driving means so that they can be taken out from said housing as a unit.

15. A disk cleaning device according to claim 14, wherein said cleaning unit comprises:

a cleaning tape cassette incorporating therein said feeding and winding reels having said cleaning tape wound therearound; and

a support mechanism including said presser roller and supporting thereon said cleaning tape cassette in a detachable manner.

16. A disk cleaning device according to any one of claims 4 to 15, further comprising oscillating means provided independently of said driving means for reciprocatively oscillating said cleaning tape in a radial direction of the disk.

17. A disk cleaning device according to claim 16, wherein said oscillating means comprises:

a support frame having a pair of opposite side plates on which support shafts for said feeding and winding reels and said presser roller are rotatably supported at their opposite ends;

a bracket mounted on said housing for supporting said support frame through guide shaft means for sliding movement relative thereto;

a cam rotatably supported on a shaft;

a cam follower mounted on said support frame and biased into contact with said cam; and

cam drive means for driving said cam so that said support frame together with said cam follower is caused to oscillate along said slide shaft means relative to said bracket.

18. A disk cleaning device according to claim 17, wherein said feeding and winding reels are of substantially the same construction, said reels having support shafts detachably supported at their opposite ends by the opposite side plates of said support frame in such a manner that the mounting positions of said feeding and winding reels on said support frame are replaced with each other with said cleaning tape being turned upside down.

19. A disk cleaning device according to claim 16, wherein said oscillating means comprises:

a support frame for rotatably supporting the support shaft of said presser roller and detachably supporting said cleaning tape cassette;

a bracket mounted on said housing for supporting said support frame through slide shaft means for oscillating movement relative thereto;

a cam rotatably supported on a shaft;

a cam follower mounted on said support frame and biased into contact with said cam; and

cam driving means for driving said cam such that said support frame together with said cam follower is caused to oscillate along said slide shaft means relative to said bracket.

20. A disk cleaning device according to claim 17 or 19, wherein the opposite side plates of said support frame have aligned elongated holes into which the support shaft of said presser roller is loosely fitted at its opposite ends so that said presser roller is resiliently urged toward said cleaning tape by biasing means.

# FIG. 1

# FIG. 2

EP 0 470 857 A1

# F I G. 3

# FIG. 4

# F I G. 5

FIG. 6

FIG. 7

FIG. 8

# F I G. 9

# F I G. 10

EP 0 470 857 A1

# F I G. 11

# F I G. 12

EP 0 470 857 A1

# F I G. 13

# FIG. 14

# FIG. 15

# FIG. 16

# F I G. 17

# F I G. 18

# FIG. 19

EP 0 470 857 A1

# F I G. 20

# F I G. 2I

# F I G. 22

EP 0 470 857 A1

# F I G. 23

# F I G. 24

# F I G. 25

EP 0 470 857 A1

# F I G. 26

European Patent
Office

**EUROPEAN SEARCH REPORT**

Application Number

| DOCUMENTS CONSIDERED TO BE RELEVANT | | | EP 91307354.0 |
|---|---|---|---|
| Category | Citation of document with indication, where appropriate, of relevant passages | Relevant to claim | CLASSIFICATION OF THE APPLICATION (Int. Cl.5) |
| A | <u>DE - A1 - 2 447 238</u><br>(RANGABE)<br>    * Page 2, lines 1-9; fig. 1;<br>      claims 1,2 *<br>      -- | 4,6,<br>14,15 | G 11 B 23/50 |
| A | <u>DD - C2 - 146 117</u><br>(EPPLER)<br>    * Page 2, line 19 - page 3,<br>      line 15; fig.; claim 1 *<br>      -- | 1,4,6,<br>7 | |
| A | PATENT ABSTRACTS OF JAPAN,<br>unexamined applications,<br>P field, vol. 12, no. 354,<br>September 22, 1988<br>THE PATENT OFFICE JAPANESE<br>GOVERNMENT<br>page 108 P 761<br>    * Kokai-No. 63-106 978<br>      (NEC CORP) *<br>      -- | 4-6 | |
| P,A | <u>EP - A2 - 0 429 079</u><br>(MITSUBISHI)<br>    * Abstract; fig. 1; column 3,<br>      line 35 - column 4, line 5 *<br>      ---- | 1 | TECHNICAL FIELDS<br>SEARCHED (Int. Cl.5)<br><br>G 11 B 23/00<br>G 11 B 3/00 |

The present search report has been drawn up for all claims

| Place of search | Date of completion of the search | Examiner |
|---|---|---|
| VIENNA | 08-11-1991 | DIMITROW |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
    ..........................................................
& : member of the same patent family, corresponding
    document

EPO FORM 1503 03.82 (P0401)